# EUROPÄISCHE PATENTSCHRIFT

(11) **EP 4 028 469 B1**
(45) Veröffentlichungstag und Bekanntmachung des Hinweises auf die Patenterteilung: **29.01.2025**
(21) Anmeldenummer: 20772248.9
(22) Anmeldetag: 11.09.2020
(51) Int. Cl.: C08L 1/16, C08B 5/00, C08B 3/00, C08L 1/10, C08B 3/14, C09K 21/12

(54) **PHOSPHORHALTIGE CELLULOSEESTER, VERFAHREN ZU IHRER HERSTELLUNG, VERWENDUNG UND FLAMMSCHUTZMITTEL**
PHOSPHORUS-CONTAINING CELLULOSE ESTERS, METHODS FOR THEIR PREPARATION, THEIR USE, AND FLAME RETARDANTS
ESTERS DE CELLULOSE CONTENANT DU PHOSPHORE, LEURS PROCÉDÉS DE PRÉPARATION, LEUR UTILISATION ET IGNIFUGES

(30) Priorität: 11.09.2019 DE 102019213793
(43) Veröffentlichungstag der Anmeldung: 20.07.2022
(73) Patentinhaber: Fraunhofer-Gesellschaft zur Förderung der angewandten Forschung e.V., 80686 München (DE)
(72) Erfinder: CIESIELSKI, Michael, 64289 Darmstadt (DE); CHALWATZIS, Elias, 64289 Darmstadt (DE); NEZAMI, Robin, 64289 Darmstadt (DE); SPERLICH, Benedikt, 64289 Darmstadt (DE)
(74) Vertreter: Pfenning, Meinig & Partner mbB
(86) Internationale Anmeldenummer: PCT/EP2020/075448
(87) Internationale Veröffentlichungsnummer: WO 2021/048335

(56) Entgegenhaltungen:
- YAN L ET AL: "Graft copolymerization of 2-methacryloyloxyethyl phosphorylcholine to cellulose in homogeneous media using atom transfer radical polymerization for providing new hemocompatible coating materials", JOURNAL OF POLYMER SCIENCE PART A: POLYMER CHEMISTRY, JOHN WILEY & SONS, INC, US, vol. 46, no. 10, 15 May 2008 (2008-05-15), pages 3306 - 3313, XP009120555, ISSN: 0887-624X, DOI: 10.1002/POLA.22670
- YAN L ET AL: "Graft copolymerization of 2-methacryloyloxyethyl phosphorylcholine to cellulose in homogeneous media using atom transfer radical polymerization for providing new hemocompatible coating materials", JOURNAL OF POLYMER SCIENCE PART A: POLYMER CHEMISTRY, JOHN WILEY & SONS, INC, US, vol. 46, no. 10, 15 May 2008 (2008-05-15), pages 3306 - 3313, XP009120555, ISSN: 0887-624X, DOI: 10.1002/POLA.22670

## Beschreibung

Die Erfindung betrifft Celluloseester, deren Estergruppen zumindest teilweise phosphorhaltig sind und auf ungesättigten Carbonsäuren sowie auf reaktiven Phosphorkomponenten basieren, wobei letztere vorzugsweise Phosphorderivate von Zuckeralkoholen oder Weinsäurederivaten sind. Die Erfindung betrifft auch Verfahren zur Herstellung der neuen phosphorhaltigen Celluloseester und ihre Verwendung als Flammschutzmittel für Kunststoffe.

Die leichte Entflamm- bzw. Brennbarkeit ist ein Nachteil der meisten Kunststoffmaterialien, der für zahlreiche Anwendungen mit Hilfe von Flammschutzmitteln überwunden bzw. abgemildert werden muss. Neben mineralischen Additiven und Polyphosphaten, die zumeist in beträchtlichen Mengen zugesetzt werden müssen und in vielen Fällen die Materialeigenschaften verschlechtern sowie speziellen Flammschutzadditiven, die nur begrenzte Einsatzgebiete haben, sind halogenhaltige Flammschutzmittel von großer Bedeutung, da sie effizient und kostengünstig sind und die Materialparameter weniger beeinträchtigen. Allerdings können letztere gesundheitliche Risiken hervorrufen - insbesondere bei ihrer Wirkung im Brandfall wegen Freisetzung toxischer Gase - sowie Umweltprobleme verursachen, nicht zuletzt bei der Entsorgung der Kunststoffe, welche sie enthalten. Dies betrifft besonders Kombinationen halogenhaltiger Flammschutzmittel mit dem Synergisten Antimon(III)-oxid, welche in großem Umfang in Engineering Plastics und Polyolefinen eingesetzt werden.

Wünschenswert sind Flammschutzmittel, welche diese Nachteile nicht aufweisen und möglichst aus nachwachsenden Rohstoffen erzeugt werden können. Als Alternative zu den halogenhaltigen Flammschutzmitteln sind spezielle phosphororganische Verbindungen, die in ökologischer und gesundheitlicher Hinsicht weniger bedenklich sind, bedeutungsvoll geworden. Es ist sowohl die alleinige Verwendung derartiger Phosphate, Phosphinate und Phosphonate als Flammschutzmittel bekannt wie auch deren Einsatz als Bestandteil von Flammschutzmittel-Mischungen bzw. synergistischen Flammschutzmittel-Systemen, z. B. in Kombinationen mit 1,3,5-Triazinverbindungen oder Polyphosphaten.

Makromolekulare phosphororganische Verbindungen haben bei ihrer Verwendung als Flammschutzmittel den Vorteil, dass sie im Vergleich zu entsprechenden niedermolekularen Phosphorverbindungen weniger Weichmachereffekt, welcher in vielen Fällen wegen Verschlechterung der Materialeigenschaften unerwünscht ist, hervorrufen und kaum Tendenz zur Migration aus dem Material zeigen. Die Verwendung makromolekularer Phosphorverbindungen als Flammschutzmittel für Kunststoffe ist bereits bekannt.

In der WO 2009/109347 A1 ist ein linearer phosphorhaltiger Polyester beschrieben, welcher auf Itaconsäure und Ethylenglycol basiert und mittels Phospha-Michael-Addition von DOPO an Itaconsäure bzw. Itaconsäurederivate und anschließende Polykondensation mit Ethylenglycol erhalten wird. Dieser Polyester erweicht bzw. schmilzt bereits bei relativ niedrigen Temperaturen, was bei seiner Einarbeitung in Kunststoffe nachteilig ist.

In der DE 10 2013 101 487 A1 sind phosphorhaltige Duromere beschrieben. Diese Duromere besitzen eine Polyacrylat-Grundstruktur und werden ebenfalls mittels eines zweistufigen Prozesses erhalten. Zunächst wird eine geeignete Phosphorkomponente, z.B. 9, 1O-Dihydro-9-oxa-1O-phosphaphenanthren-10-oxid (DOPO), mittels Phospha-Michael-Addition an mehrfunktionelle Acrylate addiert, wobei das stöchiometrische Verhältnis so gewählt wird, dass durchschnittlich mehr als eine freie Acrylatgruppe pro Molekül verbleibt. Anschließend werden die verbliebenen Acrylat-Funktionalitäten mittels radikalischer Polymerisation umgesetzt, was zur Vernetzung und Entstehung des Duromers führt. Diese makromolekularen Flammschutzmittel eignen sich nur für spezielle Einsatzgebiete. Bei phosphorhaltigen Flammschutzmitteln wird neben makromolekularen Eigenschaften auch zunehmend ein möglichst hoher Anteil an biobasierten Strukturbausteinen gewünscht.

Ein Ausgangsstoff des in der WO 2009/109347 A1 beschriebenen phosphorhaltigen Polyesters - die Itaconsäure - ist biobasiert, die zwei anderen aber nicht, so dass der Anteil aus nachwachsenden Rohstoffen relativ gering ist.

Des Weiteren wurden phosphorhaltige Flammschutzmittel synthetisiert und getestet, welche auf Cellulose. Stärke, Lignin, oligomeren Zuckern, Rizinusöl usw. basieren.

Zudem wurden Flammschutzmittel erzeugt, bei denen ein Teil der Ausgangsstoffe. wie z. B. Pentaerythritol, spezielle Phenole oder andere Ausgangsstoffe aus nachwachsenden Rohstoffen gewonnen wurden. Während die erstgenannten Flammschutzmittel Nachteile gegenüber herkömmlichen, nicht biobasierten Flammschutzmitteln hinsichtlich ihrer thermischen Stabilität, Materialverträglichkeit etc. aufweisen und daher kaum für Hochleistungspolymere geeignet sind, ist bei letzteren der biobasierte Anteil meistens nur moderat, insbesondere bei Berücksichtigung der zu ihrer Herstellung erforderlichen Synthesechemikalien.

Einen Überblick über aktuelle Entwicklungen zu biobasierten Flammschutzmitteln bietet folgender Übersichtsartikel: Sonnier R., Taguet A., Ferry L., Lopez-Cuesta JM. (2018) Flame Retardant Biobased Polymers. In: Towards Bio-based Flame Retardant Polymers. SpringerBriefs in Molecular Science. Springer, Cham (DOI https://doi.org/10.1007/978-3-319-67083-6-1; Online ISBN 978-3-319-67083-6; Print ISBN 978-3-319-67082-9).

L. Yan et al. beschreiben in Journal of Polymer Science: Part A: Polymer Chemistry, Vol. 46, 3306-3313 (2008) die Pfropf-Copolymerisation von 2-Methacryloyloxyethyl Phosphorylcholin an Cellulose in homogenen Medien unter Verwendung der Atomtransfer-Radikalpolymerisation, um neue hämokompatible Beschichtungsmaterialien zu erhalten.

Die Aufgabe der vorliegenden Erfindung bestand gegenüber dem Stand der Technik darin, makromolekulare Flammschutzmittel für Kunststoffe bereitzustellen, welche größtenteils biobasiert sind und sich für verschiedene Kunststoffe inklusive Engineering Plastics eignen. Diese neuartigen Flammschutzmittel sollen eine hohe Flammschutzwirkung hervorrufen und die Materialeigenschaften der Kunststoffe nicht nachteilig beeinflussen. Für eine effiziente Herstellung der biobasierten Flammschutzmittel soll eine effiziente Methode gefunden werden.

Diese Aufgabe wird bezüglich eines Cellulosederivats mit Merkmalen des Patentanspruchs 1, bezüglich eines Herstellungsverfahrens des Cellulosederivats mit den Merkmalen des Patentanspruchs 5, bezüglich der Verwendung des Cellulosederivats mit den Merkmalen des Patentanspruchs 10, bezüglich einer Flammschutzzusammensetzung mit den Merkmalen des Patentanspruchs 11

sowie bezüglich einer Kunststoffzusammensetzung mit den Merkmalen des Patentanspruchs 13 gelöst. Hierbei stellen die jeweiligen abhängigen Patentansprüche vorteilhafte Weiterbildungen dar.

Die vorliegende Erfindung betrifft somit ein Cellulosederivat der allgemeinen Formel I 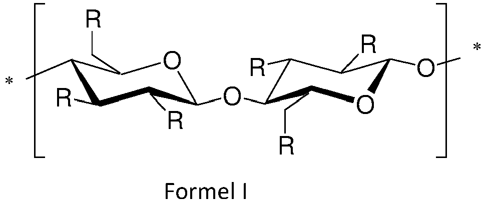 wobei
- R: bei jedem Auftreten gleich oder verschieden ist und ausgewählt ist aus der Gruppe bestehend aus Hydroxylgruppen, Resten der allgemeinen Formel II und Resten der allgemeinen Formel III 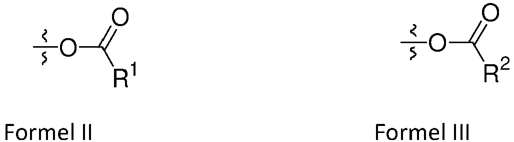
wobei
- R¹: bei jedem Auftreten gleich oder verschieden ist und ausgewählt ist aus der Gruppe bestehend aus phosphorhaltigen Substituenten, und
- R²: bei jedem Auftreten gleich oder verschieden ist und ausgewählt ist aus der Gruppe bestehend aus linearen oder verzweigten Alkylresten mit 1 bis 36 Kohlenstoffatomen, linearen oder verzweigten Arylalkylresten mit 7 bis 36 Kohlenstoffatomen, mit der Maßgabe, dass in Formel I zumindest ein Rest R ein Rest gemäß Formel II ist.

In den oben dargestellten Verbindungen gemäß Formel II und Formel III bedeutet die geschlängelte Linie die Anbindungsstelle des jeweiligen molekularen Fragmentes an das Cellulosegerüst gemäß der allgemeinen Formel I. Diese Definitionen gelten ebenso für sämtliche weiteren, der vorliegenden Anmeldung zugrunde liegenden Formeln.

Überraschenderweise wurde gefunden, dass ebenso Cellulosederivate, die phosphorhaltige Gruppen tragen, hervorragende Flammschutzeigenschaften, insbesondere für Kunststoffzusammensetzungen, aufweisen.

Ein Vorteil der neuen phosphorhaltigen Flammschutzmittel ist ihre makromolekulare Struktur, wie sie zunehmend für Flammschutzmittel gefordert wird. Der wichtigste Vorteil der erfindungsgemäßen Flammschutzmittel ist jedoch ihr hoher Anteil an biobasierten Strukturbausteinen.

Dies wird erreicht, indem Cellulose für das polymere Rückgrat verwendet wird, was besonders vorteilhaft ist, da Cellulose die am weitesten verbreitete und in der größten Menge verfügbare biobasierte Substanz ist und eine für einen wirksamen Flammschutz günstige Struktur hat. Außerdem ist Cellulose sehr kostengünstig. Die Verwendung von Zuckeralkoholen bzw. Weinsäurederivaten für die phosphortragenden Gruppen ist bevorzugt für den besonders hohen biobasierten Anteil. Zuckeralkohole wie Erythrit, Xylit und Mannit sind inzwischen in großer Menge und zunehmend kostengünstig verfügbar, doch ist eine Verwendung von deren Phosphorderivaten in Flammschutzmitteln bislang nicht bekannt. Zudem kann die Struktur der Flammschutzmittel, insbesondere die der phosphortragenden Gruppen, an den jeweiligen Verwendungszweck angepasst werden, so dass Einsatzbereiche zugänglich werden, für die biobasierte Flammschutzmittel bisher nicht geeignet sind. Vorteilhaft ist auch, dass eine effiziente Synthesesequenz zur Herstellung der neuen Flammschutzmittel erfindungsgemäß ist. Schließlich ist vorteilhaft, dass sich die erfindungsgemäßen Substanzen strukturell stark von bekannten Flammschutzmitteln unterscheiden und somit eine neue Klasse von Flammschutzmitteln repräsentieren.

Die erfindungsgemäßen phosphorhaltigen Celluloseester können als alleinige Flammschutzmittel oder als Bestandteil flammschützender Mischungen in Kombination mit anderen Flammschutzmitteln bzw. die Flammschutzwirkung verstärkenden Substanzen in Kunststoffen eingesetzt werden.

Erfindungsgemäß ist beim Cellulosederivat vorgesehen, dass in der allgemeinen Formel II der Rest R¹ ausgewählt aus der Gruppe bestehend aus Resten gemäß der allgemeinen Formel IV 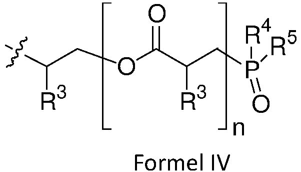 wobei bei jedem Auftreten die Variablen gleich oder verschieden sind und
- R³: ausgewählt ist aus der Gruppe bestehend aus Wasserstoff oder linearen oder verzweigten Alkylresten mit 1 bis 36, bevorzug 1 bis 6 Kohlenstoffatomen,

- R⁴ und R⁵: unabhängig voneinander ausgewählt sind aus der Gruppe bestehend aus Alkylresten, Arylresten, Alkylarylresten, Arylalkylresten, O-Alkylresten, O-Arylresten, O-Alkylarylresten, N-Alkylresten, N-Arylresten, N-Arylalkylresten, N-Alkylarylresten, wobei R⁴ und R⁵ sowie das Phosphoratom auch Bestandteil heterocyclischer Ringsysteme sein kann, welches ein- oder mehrgliedrig sein können, sowie
- n: 0 oder eine ganze Zahl von 1 bis 3 ist.

Ferner ist es von Vorteil, wenn das heterocyclische Ringsystem ausgewählt ist aus der Gruppe bestehend aus den nachfolgenden Gruppierungen 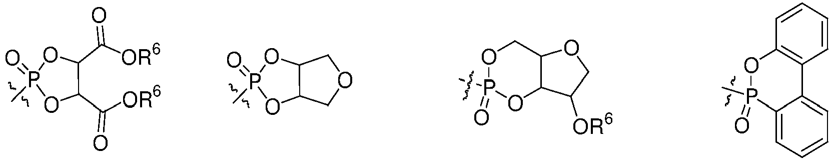 wobei
- R⁶: unabhängig voneinander ausgewählt ist aus der Gruppe bestehend aus Alkylresten, Arylresten, Alkylarylresten, Arylalkylresten, O-Alkylresten, O-Arylresten, O-Alkylarylresten, N-Alkylresten, N-Arylresten, N-Arylalkylresten und N-Alkylarylresten; bevorzugt Alkylresten mit 1 bis 12 Kohlenstoffatomen oder Alkylrylresten mit 7 bis 14 Kohlenstoffatomen.

Bevorzugt ist ebenso, dass
- R²: bei jedem Auftreten gleich oder verschieden ist und ausgewählt ist aus der Gruppe bestehend aus linearen oder verzweigten Alkylresten mit 1 bis 12 Kohlenstoffatomen, linearen oder verzweigten Arylalkylresten mit 7 bis 14 Kohlenstoffatomen.

Bezüglich des Substitutionsmusters ist es von Vorteil, wenn, bezogen auf sämtliche Reste R der molare Anteil der Reste gemäß Formel II, mindestens 2 mol-%, bevorzugt 5 bis 100 mol-%, weiter bevorzugt 15 bis 95 mol-%, besonders bevorzugt 40 bis 90 mol.-%, der Reste gemäß Formel III 0 bis 98 mol-%, bevorzugt 0 bis 95 mol-%, weiter bevorzugt 5 bis 85 mol-%, besonders bevorzugt 10 bis 90 mol.-% und/oder der Hydroxygruppen maximal 50 mol-%, bevorzugt 0 bis 50 mol-%, bevorzugt 0 bis 20 mol-%, besonders bevorzugt 0 bis 10 mol.-% beträgt.

Die vorliegende Erfindung betrifft ebenso ein Verfahren zur Herstellung des erfindungsgemäßen Cellulosederivats, durch
a) Veresterungs- und/oder Umesterungsreaktion gefolgt von einer Addition mindestens einer einen phosphorhaltigen Substituenten enthaltenden Verbindung, wobei
   in einem ersten Schritt
   - Cellulose zumindest teilweise mit mindestens einem Veresterungsreagenz, das die Hydroxylgruppen der Cellulose zu Resten R' verestert, wobei R' ein Rest der allgemeinen Formel V ist 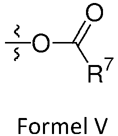 wobei R⁷ eine gegenüber der mindestens einen phosphorhaltigen Substituenten enthaltenden Verbindung reaktive Funktionalität ist, oder
   - ein Celluloseester der allgemeinen Formel I wie obenstehend definiert, mit der Maßgabe, dass
      R bei jedem Auftreten gleich oder verschieden ist und ausgewählt ist aus der Gruppe bestehend Resten der allgemeinen Formel III,
      zumindest teilweise mit mindestens einem Umesterungsreagenz, das die Reste gemäß der allgemeinen Formel III zu Resten der allgemeinen Formel V umestert, oder
   - ein gemischter Celluloseester der allgemeinen Formel I wie obenstehend definiert, mit der Maßgabe, dass
      R bei jedem Auftreten gleich oder verschieden ist und ausgewählt ist aus der Gruppe bestehend aus Hydroxylgruppen und Resten der allgemeinen Formel III, wobei der gemischte Celluloseester sowohl Hydroxylgruppen als auch Reste R der allgemeinen Formel III umfasst,
         mit mindestens einem Reagenz, das die Hydroxylgruppen des gemischter Celluloseesters zu Resten der allgemeinen Formel V verestert und/oder die Reste gemäß der allgemeinen Formel III zu Resten der allgemeinen Formel V umestert,
      umgesetzt wird, und
      in einem anschließenden zweiten Schritt mindestens eine, einen phosphorhaltigen Substituenten enthaltende Verbindung an die reaktive Funktionalität R⁷ der allgemeinen Formel V addiert wird,
         oder
b) durch Veresterung bzw. Umesterung, wobei
   - Cellulose zumindest teilweise mit mindestens einem Veresterungsreagenz, das die Hydroxylgruppen der Cellulose zu Resten R wie obenstehend definiert, verestert, wobei bezogen auf die gesamte Cellulose zumindest eine Hydroxylgruppe zu einer Estergruppe gemäß Formel II verestert wird, oder
   - ein Celluloseester der allgemeinen Formel I wie obenstehend definiert, mit der Maßgabe, dass
      R bei jedem Auftreten gleich oder verschieden ist und ausgewählt ist aus der Gruppe bestehend Resten der allgemeinen Formel III,
      zumindest teilweise mit mindestens einem Umesterungsreagenz, das die Reste gemäß der allgemeinen Formel III zu Resten der allgemeinen Formel II umestert, oder
   - ein gemischter Celluloseester der allgemeinen Formel I wie obenstehend definiert, mit der Maßgabe, dass
      R bei jedem Auftreten gleich oder verschieden ist und ausgewählt ist aus der Gruppe bestehend aus Hydroxylgruppen und Resten der allgemeinen Formel III wie obenstehend definiert, wobei der gemischte Celluloseester sowohl Hydroxylgruppen als auch Reste R der allgemeinen Formel III umfasst,
      mit mindestens einem Reagenz, das die Hydroxylgruppen des gemischten Celluloseesters zu Resten der allgemeinen Formel I wie obenstehend definiert verestert und/oder die Reste gemäß der allgemeinen Formel III zu Resten der allgemeinen Formel I umestert,
      wobei bezogen auf das gesamte Cellulosederivat zumindest eine Hydroxylgruppe zu einer Estergruppe gemäß Formel II verestert und/oder zumindest teilweise die Reste gemäß der allgemeinen Formel III zu Resten der allgemeinen Formel II umgeestert werden, umgesetzt wird.

Die erfindungsgemäße Herstellung des Cellulosederivats umfasst somit zwei Varianten. Bei der oben dargestellten Variante a) wird die Herstellung zweistufig durchgeführt, wobei Cellulose zunächst verestert bzw. ein Celluloseester umgeestert wird, anschließend erfolgt die Addition einer einen phosphorhaltigen Substituenten enthaltenden Verbindung. In der Variante b) wie oben dargestellt erfolgt die Veresterung bzw. Umesterung mit einer bereits einen phosphorhaltigen Substituenten enthaltenden Verbindung. Bei der Variante a) bzw. bei der Herstellung der einen phosphorhaltigen Substituent enthaltenden Verbindung gemäß Variante b) kann die Addition z.B. durch eine Phospha-Michael-Addition erfolgen. Insbesondere Variante a) kann hierbei durch Phospha-Michael-Addition von phosphororganischen Verbindungen, welche ein reaktives Wasserstoffatom am Phosphoratom tragen, an Celluloseester, welche aktivierte Alkenylgruppen tragen, erfolgen.

Die Phospha-Michael-Addition der Phosphorverbindungen an die aktivierten Alkenylgruppen der Celluloseester kann unter Zuhilfenahme einer Base, wie z.B. Triethylamin, unter Bedingungen, wie sie dem Fachmann für Phospha-Michael-Additionen bekannt sind, erfolgen.

Eine bevorzugte Ausführungsform der erfindungsgemäßen Varianten des Verfahrens sieht vor, dass bei der
a) Veresterungs- und/oder Umesterungsreaktion gefolgt von einer Addition mindestens einer einen phosphorhaltigen Substituenten enthaltenden Verbindung
   im ersten Schritt das mindestens eine Veresterungsreagenz, das mindestens eine Umesterungsreagenz bzw. das mindestens eine Reagenz zumindest eine Verbindung, ausgewählt aus den Verbindungen der allgemeinen Formel Vla und/oder VIb 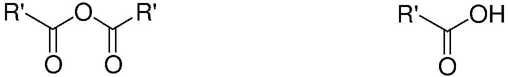 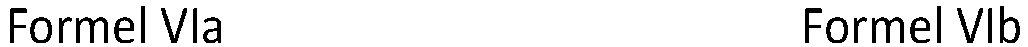
   beinhaltet oder hieraus besteht, wobei
   in Formel Vla
   R' bei jedem Auftreten gleich oder verschieden ist und ausgewählt ist aus Resten gemäß der allgemeinen Formel Vlla und Vllb und Resten R² wie obenstehend definiert 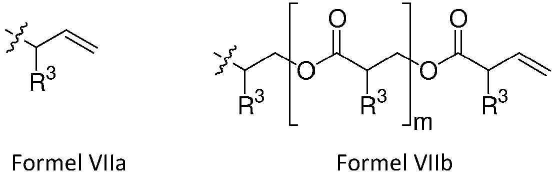 wobei R³ wie in obenstehend definiert ist, mit der Maßgabe, dass zumindest ein Rest R' gemäß Formel Vlla oder VIIb ist, und m 0, 1 oder 2 ist, sowie
   in Formel VIb
   R' ausgewählt ist aus Resten gemäß der allgemeinen Formel VIIa und Vllb,
      und
   im anschließenden zweiten Schritt die mindestens eine, einen phosphorhaltigen Substituenten enthaltende Verbindung ausgewählt ist aus der Gruppe bestehend aus Verbindungen der allgemeinen Formel VIII 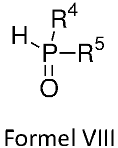
   wobei R⁴ und R⁵ wie in Anspruch 2 definiert sind,
      oder
b) bei der Veresterung bzw. Umesterung
   im ersten Schritt das mindestens eine Veresterungsreagenz, das mindestens eine Umesterungsreagenz bzw. das mindestens eine Reagenz zumindest eine Verbindung, ausgewählt aus den Verbindungen der allgemeinen Formel Vla und/oder VIb 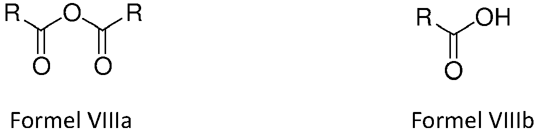
   beinhaltet oder hieraus besteht, wobei
   in Formel VIIIa
   R bei jedem Auftreten gleich oder verschieden ist und ausgewählt ist aus Resten gemäß der allgemeinen Formel IV wie in Anspruch 2 und Resten R² wie obenstehend definiert, sowie
   in Formel Vlllb
   R ausgewählt ist aus Resten gemäß der allgemeinen Formel IV wie obenstehend definiert.

Vorteilhaft ist ferner, wenn in den Varianten a) oder b) bezogen auf die Gesamtheit der Hydroxygruppen der Cellulose, Estergruppen des Celluloseesters bzw. Hydroxygruppen und der Estergruppen des gemischten Celluloseesters 0,1 bis 20, bevorzugt 0,5 bis 10, besonders bevorzugt 1,0 bis 5,0 mol-Äquivalente des mindestens einen Veresterungsreagenzes, des mindestens einen Umesterungsreagenzes bzw. des mindestens einen Reagenzes eingesetzt werden.

In Variante a) ist es von Vorteil, wenn bezogen auf die Menge der im ersten Reaktionsschritt erzeugten Reste der allgemeinen Formel V, 0,05 bis 10, bevorzugt 0,1 bis 5, besonders bevorzugt 0,25 bis 1,0 mol-Äquivalente der mindestens einen, einen phosphorhaltigen Substituent enthaltenden Verbindung eingesetzt werden.

Besonders bevorzugt wird die Veresterung/Umesterung in Gegenwart von Umesterungs- bzw. Veresterungskatalysatoren durchgeführt.

Zudem betrifft die vorliegende Erfindung die Verwendung eines Cellulosederivats gemäß Formel I 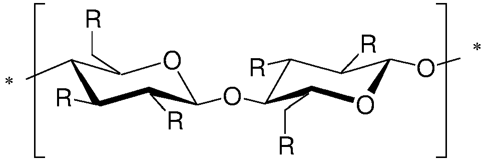 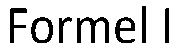 wobei
- R: bei jedem Auftreten gleich oder verschieden ist und ausgewählt ist aus der Gruppe bestehend aus Hydroxylgruppen, Resten der allgemeinen Formel II und Resten der allgemeinen Formel III 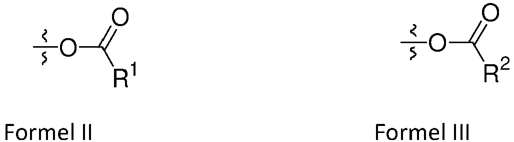
wobei
- R¹: bei jedem Auftreten gleich oder verschieden ist und ausgewählt ist aus der Gruppe bestehend aus phosphorhaltigen Substituenten, und
- R²: bei jedem Auftreten gleich oder verschieden ist und ausgewählt ist aus der Gruppe bestehend aus linearen oder verzweigten Alkylresten mit 1 bis 36 Kohlenstoffatomen, linearen oder verzweigten Arylalkylresten mit 7 bis 36 Kohlenstoffatomen, mit der Maßgabe, dass in Formel I zumindest ein Rest R ein Rest gemäß Formel II ist.
als Flammschutzmittel, bevorzugt für Kunststoffe, insbesondere für Thermoplasten, wie ungefüllte und gefüllte bzw. verstärkte Polyester, Polyamide, Polyolefine, Polycarbonate, PMMA, Polystyrol, Styrol-Blockpolymere wie ABS und SBS, für Celluloseester wie Celluloseacetat, Cellulosepropionat und Cellulosebutyrat sowie für Polyurethane und Epoxidharze.

Des Weiteren betrifft die vorliegende Erfindung eine Flammschutzzusammensetzung, die ein Cellulosederivat gemäß Formel I 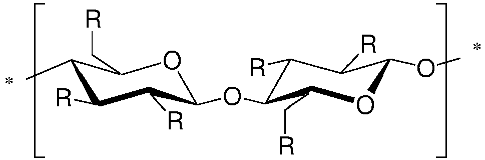 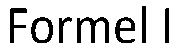 wobei
- R: bei jedem Auftreten gleich oder verschieden ist und ausgewählt ist aus der Gruppe bestehend aus Hydroxylgruppen, Resten der allgemeinen Formel II und Resten der allgemeinen Formel III 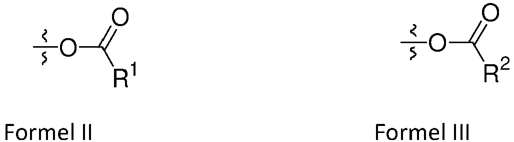
wobei
- R¹: bei jedem Auftreten gleich oder verschieden ist und ausgewählt ist aus der Gruppe bestehend aus phosphorhaltigen Substituenten, und
- R²: bei jedem Auftreten gleich oder verschieden ist und ausgewählt ist aus der Gruppe bestehend aus linearen oder verzweigten Alkylresten mit 1 bis 36 Kohlenstoffatomen, linearen oder verzweigten Arylalkylresten mit 7 bis 36 Kohlenstoffatomen, mit der Maßgabe, dass in Formel I zumindest ein Rest R ein Rest gemäß Formel II ist.
sowie mindestens einem weiteren, sich vom Cellulosederivat der allgemeinen Formel I unterscheidenden Flammschutzmittel umfasst oder hieraus besteht.

Insbesondere ist es bei der erfindungsgemäßen Flammschutzzusammensetzung von Vorteil, wenn das mindestens eine weitere, sich vom Cellulosederivat der allgemeinen Formel I unterscheidende Flammschutzmittel ausgewählt ist aus der Gruppe bestehend aus Metallhydroxiden, Melaminderivaten, Stickstoffbasen, Phosphaten, Phosphonaten, Phosphinaten, Pyrophosphaten, Polyphosphaten, Siloxanen, Pentaerythritol sowie Derivaten dieser Verbindungen, vorzugsweise Magnesiumhydroxid, Aluminiumhydroxid, Böhmit, Melaminpolyphosphat, Ammoniumpolyphosphat, Melamincyanurat, Zinkpyrophosphat, Piperazinpyrophosphat und Piperazinpolyphosphat, 1,3,5-Tris(2-hydroxyethyl)isocyanurat sowie Mischungen und Kombinationen hiervon.

Des Weiteren betrifft die vorliegende Erfindung eine Kunststoffzusammensetzung, die eine erfindungsgemäße Cellulosederivat- oder eine erfindungsgemäße Flammschutzzusammensetzung umfasst bzw. hieraus besteht.

Das erfindungsgemäße Verfahren kann insbesondere durch die Veresterung von Cellulose mit Anhydriden bzw. Anhydridgemischen durchgeführt werden, wobei bevorzugt eine starke Säure, vorzugsweise konzentrierte Schwefelsäure, oder Zinkchlorid als Katalysator verwendet wird.

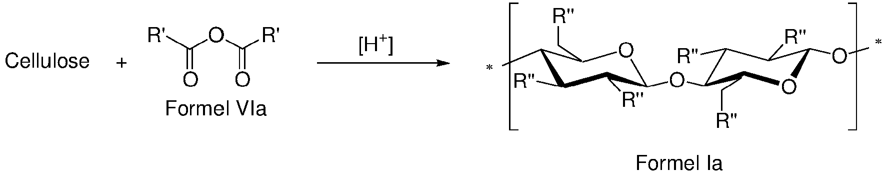

### Reaktionsschema 1

Im Reaktionsschema 1 sind die Reste R' und R wie obenstehend definiert. Der Rest R" entspricht dabei einer Gruppierung, die durch Veresterung einer freien OH-Gruppe der Cellulose mit dem Veresterungsreagenz gemäß Formel Vla entsteht, oder -für den Fall, dass nicht alle OH-Gruppen der Cellulose verestert werden - einer freien OH-Gruppe. Normalerweise verbleiben bei der Veresterung mit Anhydriden keine freien OH-Gruppen (Gegensatz zur Veresterung mit Säurechloriden), was vorteilhaft für den Verwendungszweck ist, da OH-Gruppen den Einsatz als Flammschutzadditiv stören können. Der Rest R' ist somit eine Acrylatfunktionalität gemäß Formel Vlla (siehe oben) oder eine Di-, Tri- oder Tetraalkylatfunktionalität gemäß Formel VIIb (siehe oben).

Letztere haben den Vorteil die Schmelz- und Löslichkeit der Celluloseester zu erhöhen und können in situ während der Veresterung der Cellulose durch säurekatalysierte Dimerisierung bzw. Trimerisierung von Acrylsäure entstehen. Vorteilhaft ist hierbei, dass die Menge an Diacrylat- bzw. Triacrylatsubstituenten in den Celluloseestern gemäß Formel I durch Variation der Bedingungen bei der Umsetzung gemäß Reaktionsschema 1 gesteuert werden kann. Wird die Veresterung bei moderaten Temperaturen (bis ca. 55°C) durchgeführt, werden nur sehr geringe Mengen an Di- bzw. Triacrylatgruppen eingeführt. Hingegen entstehen bei etwas höherer Reaktionstemperatur und Reaktionsdauerdauer Celluloseester mit erheblichem Anteil derartiger Substituenten. Die Anhydride der Formel Vla können auf effektive Weise durch Reaktion von Acrylsäure mit Essigsäureanhydrid hergestellt werden, wobei die entstehende Essigsäure kontinuierlich aus der Reaktionsmischung destilliert wird und z.B. ein Polymerisationsinhibitor - vorzugsweise Phenothiazin - zugegen ist. Diese Reaktion kann in Gegenwart eines geeigneten Katalysators, wie z.B. Trifluormethansulfonsäure oder ohne Katalysator durchgeführt werden. Das Prinzip dieser "Umanhydridisierung" ist literaturbekannt bzw. in Patenten beschrieben worden (DE3037301A1; EP0231689B1; US009969670). In einer bevorzugten Ausführungsform der Erfindung wird im Gegensatz zu den bekannten Methoden der "Umanhydridisierung" kein einheitliches Produkt- beispielsweise Acrylsäureanhydrid - angestrebt, sondern eine Mischung verschiedener Anhydride, die bei der Umsetzung entsprechend Reaktionsschema 1 Produkte der allgemeinen Formel Ia mit jeweils gewünschtem Substitutionsmuster ergeben, welche bei der Phospha-Michael-Addition phosphorhaltige Celluloseester der Formel I ergeben, deren strukturelle Eigenschaften an den jeweiligen Anwendungszweck angepasst sind. Das gewünschte Verhältnis zwischen den Anhydriden kann durch eine geeignete Wahl der Reaktionsbedingungen bei der "Umanhydridisierung" (Verhältnis der Ausgangsstoffe, Reaktionsdauer und Reaktionstemperatur, Katalysator) erzielt werden. Auch bei der "Umanhydridisierung" kann die Einführung von Di- bzw. Triacrylgruppen gezielt hervorgerufen oder weitestgehend unterdrückt werden (letzteres ist bei der "Umanhydridisierung" ohne stark sauren Katalysator und bei moderater Reaktionstemperatur der Fall). Dieses Verfahren hat den weiteren Vorteil, dass die gesamte Reaktionssequenz von der Erzeugung der AnhydridMischung, über die Veresterung der Cellulose bis einschließlich der Phospha-Michael-Addition in derselben Reaktionsapparatur durchgeführt werden kann, sodass der Prozess auf effiziente Weise durchgeführt werden kann. Als einziges Nebenprodukt entsteht Essigsäure.

Der nach der "Umanhydridisierung" erhaltenen Anhydridmischung können weitere Anhydride wie Propionsäureanhydrid, Buttersäureanhydrid und Methacrylsäureanhydrid oder Mischungen solcher Anhydride zugefügt werden um bei der Veresterung der Cellulose Propionat-, Butyrat- bzw. Methacrylatgruppen einzuführen. Durch Einführung derartiger Gruppen werden die Löslichkeit der Celluloseester weiter verbessert. Zudem werden mit diesen Estergruppen auch wichtige Eigenschaften der erfindungsgemäßen Flammschutzmittel positiv beeinflusst, wie z.B. die Verträglichkeit mit den flammzuschützenden Polymeren verbessert und die Wasseraufnahme verringert.

Alternativ kann das erfindungsgemäße Verfahren bevorzugt durch Umesterung von Cellulosealkylestern, z.B. von Celluloseacetat bzw. Cellulosetriacetat, mit aktivierte Alkenylgruppen tragenden Carbonsäuren - beispielsweise mit Acrylsäure - in Gegenwart geeigneter Umesterungskatalysatoren sowie von Polymerisationinhibitoren durchgeführt werden, wobei im partiellen Vakuum die freigewordene Carbonsäure mittels Destillation aus der Reaktionsmischung destilliert wird (Reaktionsschema 2).

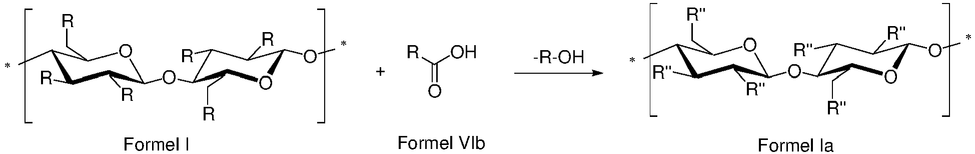

### Reaktionsschema 2

Im Reaktionsschema 2 stehen die Reste R für R³ wie oben stehend definiert. Der Rest R" entspricht dabei einer Gruppierung, die durch Umesterung einer Estergruppe Gruppe R der Cellulose mit dem Veresterungsreagenz gemäß Formel VIb entsteht, oder -für den Fall, dass nicht alle Estergruppen der Cellulose umgeestert werden - einer Estergruppe R³.

Die vorliegende Erfindung wird anhand der nachfolgenden Beispiele näher erläutert, ohne den Sachverhalt auf die dargestellten Ausführungsformen zu beschränken.

### Beispiel 1:

### Synthese eines Anhydridgemisches aus Acrylsäure und Essigsäureanhydrid:

Die Reaktionsapparatur, welche aus einem 500 ml Zweihalskolben mit Stickstoffzuleitung und wärmeisolierter Destillationskolonne, einem Liebigkühler mit Thermometer sowie einer Vorlage, die mit einer druckregelbaren Membranpumpe verbunden war, bestand, wurde Vakuum-getrocknet und mit Stickstoff gefüllt. Dann wurden Essigsäureanhydrid (1,50mol; 153 g); wasserfreie Acrylsäure (3,00mol; 216 g) sowie Phenothiazin (1,0 g) in den Zweihalskolben gegeben und dieser in ein auf 55°C vorgeheiztes Ölbad getaucht. Nachdem die Stickstoffzufuhr gestoppt worden war, wurde die Ölbadsolltemperatur im Verlauf einer Stunde auf 92°C erhöht und der der Druck auf 115mbar gesenkt, wonach die Destillation der Essigsäure einsetzte (Kopftemperatur ca. 62-64°C bei 115mbar; entspricht der bei diesem Druck zu erwartenden Siedetemperatur von Essigsäure). Die Destillation wurde 6 h fortgeführt, wobei die Ölbadtemperatur auf 95°C gesteigert und der Druck auf 108mbar vermindert wurden. Danach wurde die Apparatur mit Stickstoff gefüllt. Nachdem weitere 35 g Acrylsäure hinzugefügt, die Stickstoffzufuhr wieder gestoppt und der Druck auf 103mbar gesenkt worden waren, wurde die Destillation zwei Stunden fortgeführt (Ölbadtemperatur 96°C), wobei der Druck allmählich bis auf 90mbar verringert wurde. Nun wurde die Apparatur wieder mit Stickstoff gefüllt, und es wurden weitere 75 g Acrylsäure sowie 0,5 g Phenothiazin hinzugefügt. Das Erhitzen im Teilvakuum weitere 6 h fortgeführt, wobei die Ölbadtemperatur 95-97°C betrug und der Druck allmählich auf 75 mbar abgesenkt wurde. Insgesamt wurden in der Vorlage ca. 180 g Destillat aufgefangen, welches größtenteils aus Essigsäure bestand (NMR-spektroskopisch untersucht). Nach dem Wechseln der Vorlage wurde unter weiterer Druckminderung die überschüssige Acrylsäure destilliert. Es verblieb ein nahezu farbloser Rückstand, welcher folgende Zusammensetzung hatte (NMR-spektroskopisch bestimmt): Acrylsäureanhydrid ((AcS)₂A): ca. 82 %; gemischtes Acrylsäure-Essigsäureanhydrid (AcSESA): ca. 8 %; Acetanhydrid: ca. 2%; Acrylsäure: ca. 3 %; Essigsäure: 1%: Anhydride oligomerer Acrylsäuren: ca. 4 %.

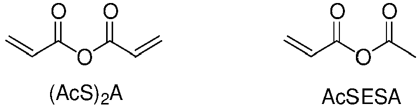

Die Menge an so erhaltener Anhydridmischung betrug ca. 205 g.

Diese Anhydridmischung wurde einer Vakuumdestillation unter Verwendung einer kurzen Kolonne unterzogen. Nach dem Vorlauf (ca. 25 g), der bei einem Druck von 25 mbar erhalten wurde, wurde die Produktfraktion unter weiterem Absenken des Druckes bis 4 mbar destilliert. Es wurden 165 g der Produktfraktion erhalten, welche ca. 90% (AcS)₂A, 6% AcSESA sowie ca. 1 % Essigsäureanhydrid und ca. 2 % Acrylsäure enthielt (Essigsäure und Anhydride oligomerer Acrylsäuren jeweils 1%). Es verblieben etwa 15 g Destillationsrückstand, welcher größtenteils aus Anhydriden oligomerer Acrylsäuren bestand.

### Beispiel 2:

### Synthese eines Cellulose-Acrylat-Acetats aus Cellulose und der Anhydridmischung von Beispiel 1

In einen 250 ml Dreihalskolben, der mit einem mechanischen Rührer ausgerüstet war (Rührblatt aus PTFE, Rührwelle PTFE-beschichtet), wurden 3,0 g Cellulosewatte gegeben. Dann wurde die Apparatur im Vakuum getrocknet und anschließend mit Stickstoff gefüllt. Anschließend wurden 20 g der in Beispiel 1 erhaltenen destillierten Anhydridmischung sowie 34 g Acrylsäure und ca. 0,3 g Schwefelsäure sowie Phenothiazin (ca. 100 mg) hinzugefügt. Es wurde kräftig gerührt um die Reagenzien möglichst gleichmäßig auf der Cellulosewatte zu verteilen, welche die gesamte Menge an Reagenzien aufsaugte. Es wurde 20 min bei Raumtemperatur gerührt. Innerhalb weiterer 20 min wurde die Temperatur auf 50°C erhöht und dann allmählich auf 58-60°C gesteigert (im Verlauf von 15 min). Während des Erwärmens wurde der Wattebausch kompakter und bildete Brocken, die allmählich zerfielen. Es bildete sich eine flüssige Phase, deren Volumen zunahm. Etwa 150 min nach der Reagenzzugabe war die Reaktionsmischung fast homogen, relativ dünnflüssig und hatte eine hellgelbe Farbe. Das Rühren bei 58-60°C wurde noch 2 h fortgeführt, dann wurde das Ölbad entfernt. Der noch warme Kolbeninhalt wurde in 300 ml Cyclohexan gerührt. Das Rühren bei Raumtemperatur wurde 45 min fortgeführt, und dann wurde das Rohprodukt mittels Filtration durch eine G3-Glasfritte isoliert. Dann wurde das Rohprodukt in einen Rundkolben überführt und im Feinvakuum getrocknet, wobei vorsichtig erwärmt wurde. Zwischenzeitlich wurden die Brocken zerkleinert (zuvor Kolben mit Stickstoff gefüllt). Nun wurden 60 ml Toluol sowie 50 mg Phenothiazin zugesetzt. Dann wurde etwa 40 min bei ca. 50°C gerührt (unter Stickstoff). Nach dem Abkühlen wurde dekantiert. Der verbliebene Rückstand wurde ein zweites Mal in Toluol gerührt (40 ml, 50°, 45 min) und nach dem Dekantieren zweimal mit 10 bzw. 5 ml Toluol gewaschen. Dann wurde der Rückstand im Vakuum (ca. 0,1 mbar) im Verlauf von 3h auf 100°C erwärmt, wobei ein hellbraunes Pulver resultierte (etwa 3 g Ausbeute). Das Protonen-NMR-Spektrum des so erhaltenen Cellulose-Acrylat-Acetats zeigte einen vollständigen Umsatz der OH-Gruppen. Das Spektrum zeigte, dass ca. 70 % der OH-Gruppen acryllert (R1: CH=CH2) und ca. 28 % acetyliert (R1: CH3) wurden (Anteil Diacrylatgruppen ≤ 3%).

### Beispiel 3:

### Synthese eines Cellulose-Acrylat-Acetat-Propionat-Diacrylats aus Cellulose, der Anhydridmischung von Beispiel 1 sowie Propionsäureanhydrid

In einen 250 ml Dreihalskolben, der mit einem mechanischen Rührer ausgerüstet war (Rührblatt aus PTFE, Rührwelle PTFE-beschichtet), wurden 3,3 g Cellulosewatte gegeben. Dann wurde die Apparatur im Vakuum getrocknet und anschließend mit Stickstoff gefüllt. Anschließend wurden 20 g der in Beispiel 1 erhaltenen destillierten Anhydridmischung, 1,5 g Propionsäureanhydrid, 37 g Acrylsäure, ca. 0,3 g Schwefelsäure sowie Phenothiazin (ca. 100 mg) im Stickstoffgegenstrom hinzugefügt. Die Watte nahm die komplette flüssige Mischung der Reagenzien auf. Die Reaktionsmischung wurde 10 Minuten lang bei Raumtemperatur gerührt und anschließend wurde sie mittels Ölbad auf 58°C erwärmt, wobei sie stets gerührt wurde und mit Stickstoff überlagert war. Etwa 1,5 Stunden nach dem Erreichen der Reaktionstemperatur war die Watte bis auf wenige Brocken aufgelöst und circa eine Stunde später war die Reaktionsmischung homogen, niederviskos und orangefarben. Es wurde insgesamt 4,5 h bei einer Ölbadtemperatur von 58-63°C gerührt. Nach dem Abkühlen auf ca. 40°C wurde der Hauptteil der flüssigen Bestandteile im Vakuum in eine Kühlfalle destilliert (ca. 8 mbar). Im Verlauf der Destillation wurde die Temperatur bis auf 50°C erhöht. Die Destillation wurde beendet, als die Viskosität deutlich zugenommen hatte. Die viskose Flüssigkeit wurde im Stickstoffgegenstrom unter Rühren in einen Kolben, in dem sich 200ml Cyclohexan befanden, gegeben, wobei das Produkt als Feststoff ausfiel. Es wurde ca. 30 min bei Raumtemperatur gerührt, dann noch ca. 15 min bei 45°C. Nach dem Abkühlen auf Raumtemperatur wurde durch eine G3-Glasfritte filtriert (nicht inert). Anschließend wurde das Produkt in einen Kolben überführt, und es wurden 40 ml Toluol sowie 50ml Methyl-tert-butylether zugegeben. Diese Mischung wurde 30 min bei 50°C unter Stickstoff gerührt. Anschließend wurde die erhaltene Suspension durch eine G3-Glasfritte filtriert. Danach wurde das Produkt wieder in einen Rundkolben überführt und noch einmal 30 min in 50 ml Methyl-*tert*-butylether bei 50°C unter Stickstoff gerührt. Danach wurde erneut durch eine G3-Glasfritte filtriert (nicht inert). Der Filterrückstand wurde zweimal mit je 20 ml Methyl-*tert*-butylether gewaschen. Das Produkt wurde bei 40°C im Feinvakuum getrocknet (Ausbeute 3,5 g).

Das Protonen-NMR-Spektrum des so erhaltenen Cellulose-Acrylat-Acetat-Diacrylats zeigte eine vollständige Veresterung der OH-Gruppen. Das Spektrum zeigte, dass insgesamt ca. 50 % der OH-Gruppen mit Acrylatgruppen (R₇: CH=CH₂) und Diacrylatgruppen verestert (R₇: CH₂-CH,-O-COCH=CH₂) wurden, ca. 15 % der OH-Gruppen mit Acetatgruppen (R₇: CH₃) verestert wurden und ca. 35% mit Propionatgruppen (R₇: CH₂-CH₃).

### Beispiel 4:

### Synthese eines Cellulose-Acrylat-Acetats mittels Umesterung von Celluloseacetat mit Acrylsäure

In eine im Vakuum getrocknete Destillationsapparatur, die mit einem Dreihalskolben, schweren Magnetrührer; Liebigkühler, Stickstoffzuleitung sowie einer gekühlten Vorlage, die an einen Blasenzähler angeschlossen war, ausgestattet war, wurden 50g wasserfreie Acrylsäure sowie 10 g Celluloseacetat sowie der Stabilisator (4-Methoxyhydrochinon; 0,25 g) gegeben. Nun wurde der Stickstoffstrom angestellt um das Reaktionsgemisch mit Stickstoff zu überlagern. Da der Stabilisator jedoch Sauerstoff benötigt um aktiv zu sein, wurden in einem Abstand von jeweils 15 Minuten circa 20ml Umgebungsluft mithilfe einer Spritze durch ein Septum in den Kolben gegeben. Nun wurde das Ölbad mit einem Heiz-Magnetrührgerät auf 105°C erwärmt und so platziert, dass der Inhalt des Kolbens ca. 1 cm unter dem Stand des Öles lag. Dabei wurde der Inhalt des Kolbens stark gerührt. Sobald sich das gesamte Celluloseacetat in der Acrylsäure gelöst hatte, wurden 0,3g Trifluormethansulfonsäure und anschließend 0,5 g wasserfreies Aluminiumchlorid hinzugegeben. Es wurde 4,5 h bei einer Ölbadtemperatur von 105°C gerührt, wobei ein schwacher Stickstoffstrom durch die Apparatur geleitet wurde. Dabei färbte sich die Reaktionsmischung dunkel.

Nach leichtem Abkühlen der Reaktionsmischung (Ölbadtemperatur 100°C) wurden ca. 100mg des Stabilisators Phenothiazin zugesetzt. Dann wurde der größte Teil der nicht umgesetzten Acrylsäure und der bei der Reaktion entstandene Essigsäure destilliert, wobei mit einem Druck von ca. 400 mbar begonnen wurde, der in Schritten von 50mbar bis auf ca. 150mbar vermindert wurde. Das Destillat wurde in einem mit flüssigem Stickstoff gekühlten Kolben kondensiert. Die NMR-spektroskopische Untersuchung des Destillates zeigte, dass dieses aus Acrylsäure und Essigsäure bestand.

Der Destillationsrückstand wurde in 100ml Dichlormethan gelöst. Die Lösung wurde mit 200 ml einer 18%igen Ammoniumhydrogencarbonat-Lösung gerührt (Kohlendioxidfreisetzung). Nach dem Abklingen der Kohlendioxidfreisetzung wurde die wässrige Phase in einem Scheidetrichter abgetrennt. Nach Zugabe von gegeben der Scheidetrichter vorsichtig geschüttelt. Die Dichlormethanphase wurde über wasserfreiem Magnesiumsulfat getrocknet. Nach Abtrennen des Trockenmittels (Filtration) wurde das Dichlormethan mittels Rotationsverdampfer entfernt. Zur Entfernung noch enthaltener Dichlormethanreste wurde der Feststoff anschließend im Vakuum getrocknet. Es wurde ein hellbrauner Feststoff erhalten (Ausbeute 8,8 g), dessen NMR-spektroskopische Untersuchung zeigte, dass ca. ein Drittel der Acetatgruppen durch Acrylatgruppen ersetzt worden sind.

### Beispiel 5:

### Synthese eines phosphorhaltigen Celluloseesters aus dem Cellulose-Acrylat-Acetat von Beispiel 2 und 9,10-Dihydro-9-oxa-10-phosphaphenathren-10-oxid (DOPO)

In einen sorgfältig im Vakuum getrockneten und mit Stickstoff gefüllten Schlenkkolben, der einen schweren Rührfisch enthielt, wurden 1 g Cellulose-Acrylat-Acetat von Beispiel 2 sowie ca. 30 mg 4-Methoxyhydrochinon (MEHQ) gegeben, dann 8 ml trockenes Tetrahydrofuran und 1,5 ml Triethylamin hinzugefügt. Anschließend wurde die Mischung auf ca. 50°C erwärmt, und es wurden 1,4 g DOPO im Stickstoffgegenstrom hinzugefügt. Die Reaktionsmischung wurde unter Rühren und Stickstoffatmosphäre

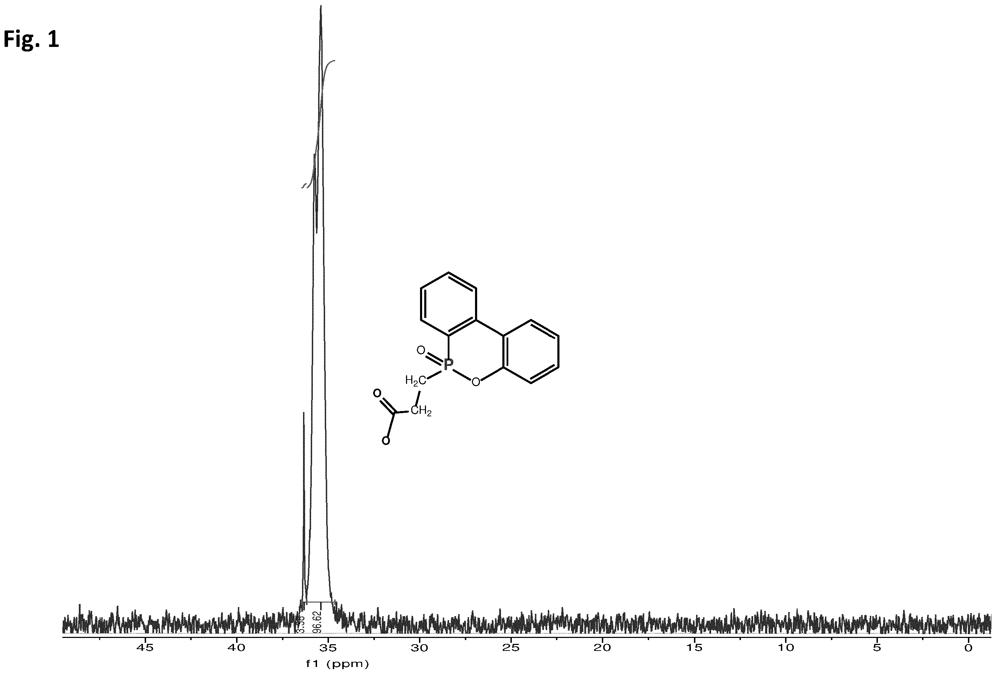

3 h bei 50°C unter Stickstoffatmosphäre gerührt, wobei ein Feststoff ausfiel. Dieser wurde mittels Dekantieren isoliert und zunächst mit Toluol (15 ml) unter Rühren auf ca. 90°C erwärmt und anschließend in Acetonitril (10 ml, ca. 70°C) gerührt (jeweils dekantiert). Um das so erhaltene Produkt zu trocknen wurde es im Vakuum (ca. 0,1 mbar) unter Rühren 4 h auf 125°C erwärmt, anschließend 30 min auf 145°C erwärmt. Nach dem Trocknen wurde ein phosphorhaltiger (DOPO-funktionalisierter) Celluoseester als bräunlich-weißes Pulver erhalten (1,8 g). Das in Figur 1 dargestellte ³¹P-NMR-Spektrum zeigt (gemessen in DMSO-d₆) die hohe Reinheit des phosphorhaltigen (DOPO-funktionalisierten) Celluloseesters.

### Beispiel 6:

### Synthese eines phosphorhaltigen Celluloseesters 1 aus dem Cellulose-Acrylat-Acetat-Propionatdiacrylat von Beispiel 3 und 9,10-Dihydro-9-oxa-10-phosphaphenathren-10-oxid (DOPO)

Ein mit einem schweren Magnetrührfisch ausgestatteter 100 ml Schlenkkolben wurde im Vakuum erwärmt um Feuchtigkeitsspuren zu entfernen und anschließend mit Stickstoff gefüllt. Dann wurden im Stickstoffgegenstrom 1,2 g des in Beispiel 3 erhaltenen Cellulose-Acrylat-Acetat-Propionat-Diacrylats, 15 ml trockenes Acetonitril sowie 1,5 ml trockenes Triethylamin gegeben. Diese Mischung wurde mittels Ölbad und Magnetheizrührer unter kräftigem Rühren auf 60°C erwärmt. Nach dem Auflösen des Ausgangsstoffs wurden im Stickstoffgegenstrom 1,5 g DOPO hinzugegeben.

Anschließend wurde die Temperatur des Ölbads auf 78°C erhöht. Nach 2,5 h bei unveränderter Temperatur wurde eine weitere Portion DOPO (0,27 g) hinzugefügt. Es wurde noch eine Stunde bei 78°C unter Stickstoffatmosphäre gerührt. Nach dem Abkühlen wurde der gut verschlossene Kolben über Nacht im Kühlschrank gelagert. Es hatte sich ein gelartiger Bodenkörper ausgeschieden. Nach dem Erwärmen auf Raumtemperatur wurde die überstehende Lösung entfernt. Dann wurden 25 ml Toluol zugegeben, und es wurde unter kräftigem Rühren zum Sieden des Toluols erwärmt. Nach dem Abkühlen des Kolbeninhalts wurde die Toluol-Lösung dekantiert. Das Erhitzen mit Toluol wurde mit der halben Menge des Lösungsmittels wiederholt.

Der so erhaltene Feststoff (Produkt) wurde im Vakuum (ca. 0,1 mbar) getrocknet. Hierbei wurde gerührt um Feststoffbrocken zu zerkleinern. Die Produkttrocknung erfolgte zunächst bei Raumtemperatur, dann wurde 4 Stunden auf 90°C erwärmt und schließlich wurde das Produkt 4 h bei 115°C getrocknet. Nach dem Trocknen wurde ein phosphorhaltiger (DOPO-funktionalisierter) Celluloseester als weißes Pulver erhalten (1,9 g).

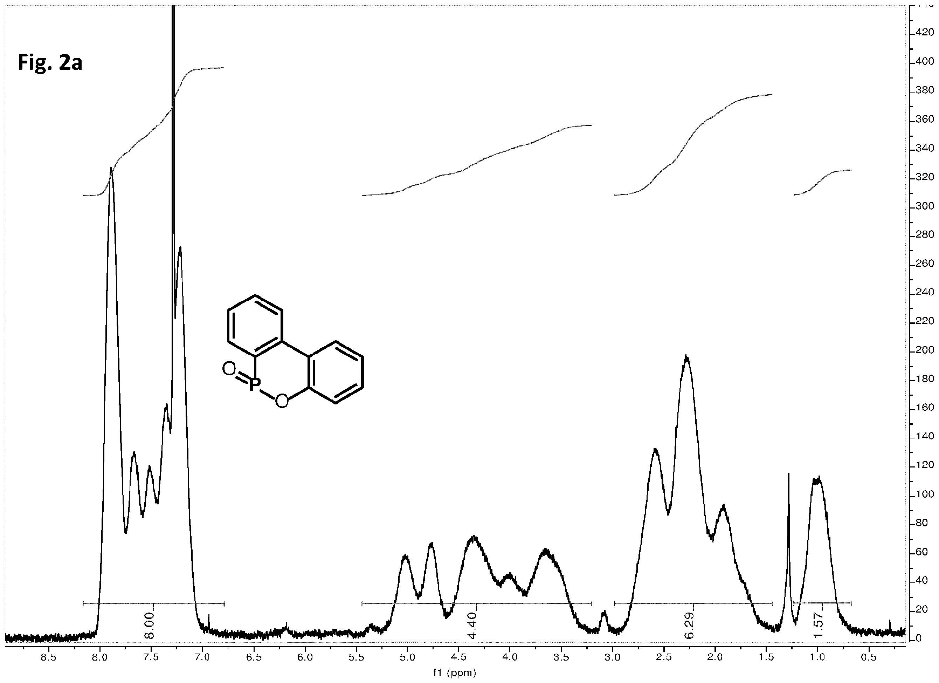

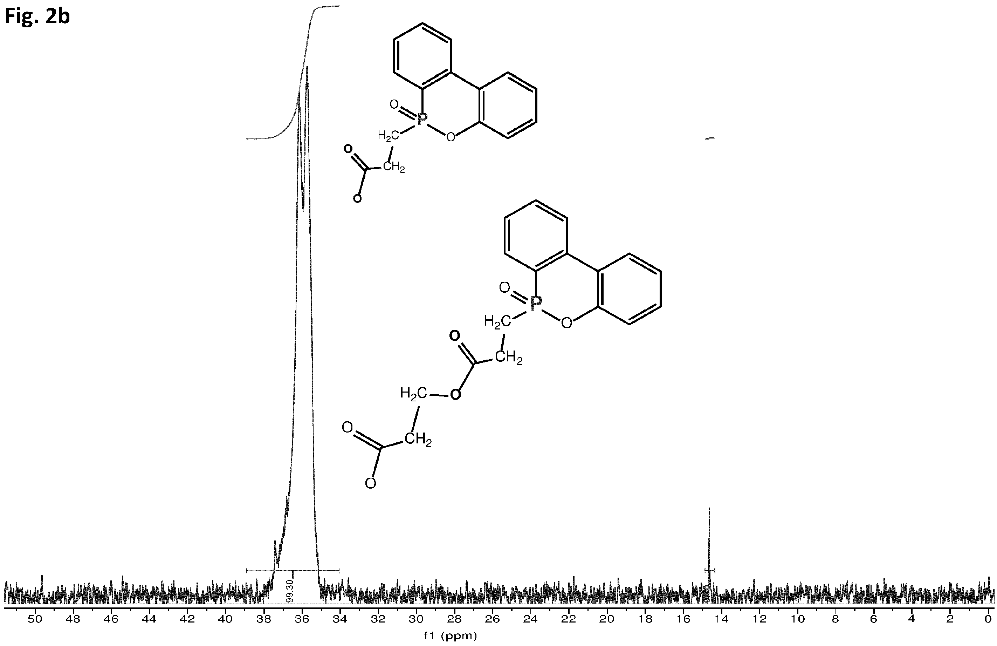

Das in Fig. 2a dargestellte ¹H-NMR-Spektrum des Produktes (gemessen in CDCl₃) zeigte einen vollständigen Umsatz der Acrylat- und Diacrylatgruppen sowie das vollständige Entfernen von Lösungsmittel- und Aminspuren. Das in Fig. 2b dargestellte ³¹P-NMR-Spektrum (gemessen in CDCl₃) bestätigt die hohe Reinheit.

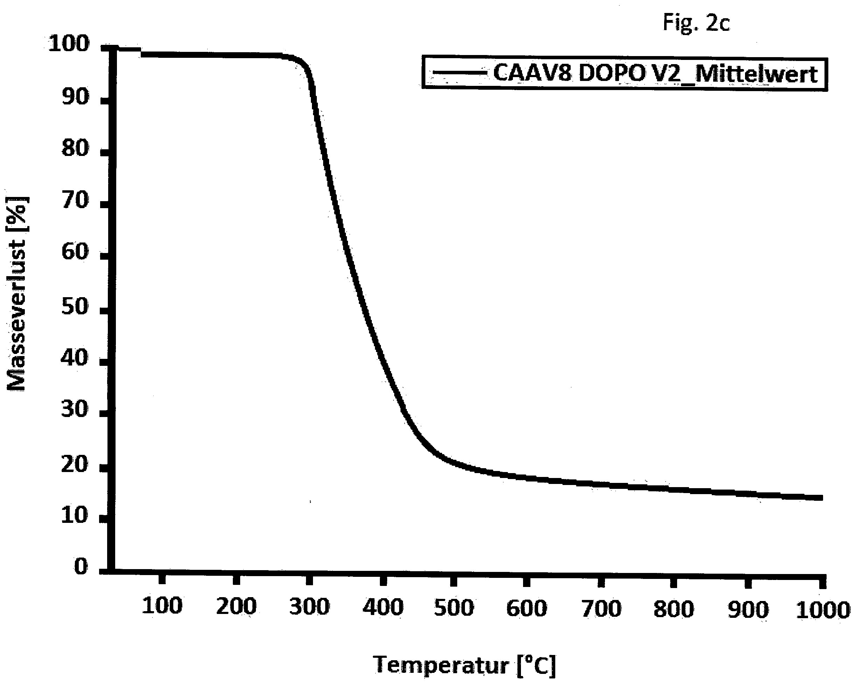

Das in Abbildung 2c dargestellte Thermogramm (TGA-Kurve) zeigt eine gute thermische Stabilität des Produktes.

### Beispiel 7:

### Synthese eines phosphorhaltigen Celluloseesters aus Cellulose-Acrylat-Acetat-Propionat-Diacrylat und phosphoryliertem Anhydroerythrit (PAHE)

Das für diese Synthese benötigte phosphorylierte Anhydroerythrit (PAHE) wurde aus Erythrit und Dimethylphosphit mittels einer literaturbekannten Synthesemethode hergestellt (G. Lapienis, St. Penczek, Journal of Polymer Science: Part A: Polymer Chemistry, 1990, 28, 1743-1762).

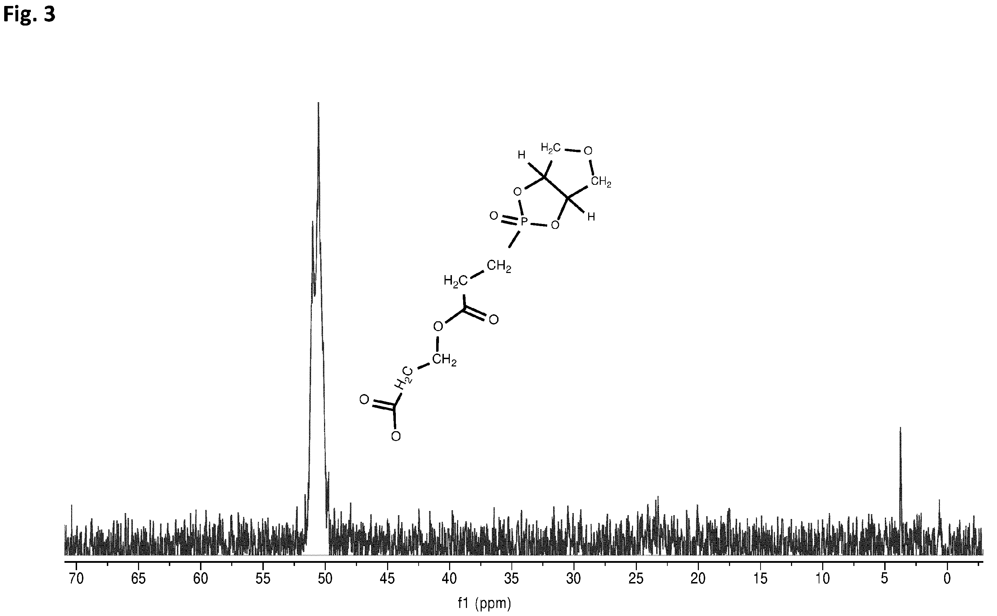

Ein mit einem schweren Magnetrührfisch ausgestatteter 100 ml Schlenkkolben wurde im Vakuum erwärmt um Feuchtigkeitsspuren zu entfernen und anschließend mit Stickstoff gefüllt. Dann wurden im Stickstoffgegenstrom 1 g des in Beispiel 3 erhaltenen Cellulose-Acrylat-Acetat-Propionat-Diacrylats, 5 ml trockenes Acetonitril sowie 1,5 ml trockenes Triethylamin gegeben. Diese Mischung wurde mittels Ölbad und Magnetheizrührer unter kräftigem Rühren auf 70°C erwärmt. Nach dem Auflösen des Ausgangsstoffs wurde im Stickstoffgegenstrom eine Lösung von 0,65 g PAHE in 5ml Acetonitril im Verlauf von 45min durch ein Septum unter Rühren hinzugegeben. Nach 4 h bei 75°C und anschließendem Abkühlen der Lösung wurde diese unter Rühren in 40ml Toluol gegeben, wobei das Produkt ausfiel. Nach dem Dekantieren des Toluols wurde der erhaltene Feststoff im Vakuum (ca. 0,1 mbar) getrocknet (4 h bei Raumtemperatur, 3 h bei 80°C und 2 h bei 100°C). Es wurde ein PAHEfunktionalisierter Celluloseester als weißes Pulver erhalten (1,2 g). Das in Fig. 3 dargestellte ³¹P-NMR-Spektrum (gemessen in CDCl₃) bestätigt die hohe Reinheit.

### Beispiel 8

### Synthese eines Cellulose-Acrylat-Acetat-Propionats aus Cellulose und einer gemäß Beispiel 1 synthetisierten Anhydridmischung

In einen trockenen 500 ml Dreihalskolben mit KPG-Rührer (Rührerwelle PTFE-beschichtet, PTFE-Rührblatt) wurden 15 g Cellulose (Biozellstoff) gegeben, dann wurde der Kolben im Vakuum getrocknet und mit Stickstoff gefüllt. Dann wurden 100 mg Phenothiazin hinzugefügt. Anschließend wurde 150 g wasserfreie Acrylsäure zugegeben und 3 min vorsichtig gerührt. Dann wurden 87 g gemäß Bespiel 1 synthetisieres Acrylsäureanhydrid und sowie 4,5 g Propionsäureanhydrid hinzugefügt und wenige Minuten gerührt, wobei eine gute Benetzung der Watte erreicht wurde. Dann wurde 1,25 g konz. Schwefelsäure zugefügt, wobei Gelbfärbung auftrat. Der Zellstoff saugte fast die gesamte Menge an Reagenzien auf. Nun wurde 10 min bei Raumtemperatur gerührt und dann wurde die Temperatur innerhalb von ca. 40 min auf ca. 57-58°C erhöht. Dabei wurde gerührt. Schon beim Erwärmen zerfiel der Wattebausch und begann sich allmählich aufzulösen bzw. zerfallen. Etwa 100 min nach der Reagenzzugabe gab es nur noch wenig suspendierten Feststoff. Nach einer weiteren Stunde war die Reaktionsmischung weitestgehend homogen und relativ dünnflüssig. Sie enthielt aber noch etwas Feststoff. Die Farbe war hellbraun. Das Rühren bei 56-59°C wurde noch 2 h fortgeführt, wobei eine bis auf eine minimale Trübung homogene Lösung resultierte (weiterhin blassbraun). Dann wurde das Ölbad entfernt.

Sofort danach wurde der Kolben mit einer Destillationsbrücke mit mittels flüssigem Stickstoff gekühlter Vorlage ausgerüstet. Dann wurden zunächst im Vakuum der Membranpumpe (min Druck ca. 5 mbar) und dann im Feinvakudie leichter flüchtigen Bestandteile der Lösung destilliert, wobei die Ölbadtemperatur bis ca. 55°C erhöht wurde. Es wurde ein Destillat aufgefangen, dass NMR-spektroskopisch untersucht wurde. Die Untersuchung ergab, dass dieses Destillat zu > 99 % aus Acrylsäure und Acrylsäureanhydrid besteht.

Der Destillationsrückstand wurde ohne Abkühlen mit ca. 400 ml Cyclohexan versetzt, und es wurde unter Stickstoffatmosphäre gerührt. Nachdem sich das Gel im Cyclohexan suspendiert hatte, wurde ca. 30 min gerührt, wobei die Ölbadtemperatur bis auf 55°C erhöht wurde. Das Rohprodukt fiel dabei als feinkörniger Feststoff aus, der mittels großer G3-Glasfritte abgesaugt wurde. Der bräunliche Filterkuchen wurde in den Kolben rücküberführt, dann wurden ca. 300 ml Methyl-tert-butylether zugefügt, und es wurde auf ca. 55°C unter Rühren erwärmt. Dann wurde das Ölbad entfernt und einige Minuten abkühlen lassen. Dann wurde das Produkt mit der G3-Glafritte abgesaugt. Dieser Arbeitsschritt wurde dreimal wiederholt (mit jeweils ca. 200 ml Methyl-tert-butylether). Das Absaugen gelang nach jeder Behandlung mit Methyl-tert-butylether schneller, da das Produkt entquoll. Das erste Methyl-tert-butylether-Filtrat war deutlich gelb und leicht trüb, das zweite schon blasser gelb und klar und die Filtrate 3 und 4 waren nahezu farblos.

Nach der vierten Behandlung mit Methyl-tert-butylether wurde das Produkt in einen 500 ml-Kolben überführt und 30 min bei einer Ölbadtemperatur von max. 60°C im Feinvakuum getrocknet. Es wurde ein mehlfarbenes Pulver erhalten, das mittels NMR-Spektroskopie untersucht wurde. Das Produkt wurde noch einer weiteren Behandlung mit Methyl-tert-Butylether unterzogen, wieder mittels der G3-Fritte abgesaugt und dann bei max. ca. 55°C im Feinvakuum getrocknet. Vom so erhaltenen Produkt wurden Spektren in Deutero-Chloroform und Deutero-DMSO aufgenommen, die zeigten, dass etwa 70 % der OH-Gruppen der Celluolse mit Acrylatgruppen verestert wurden.

Die restlichen OH-Gruppen wurden größtenteils mit Propionatgruppen und zu geringerem Ausmaß mit Acetatgruppen verestert. Auch geringe Mengen an Diacrylatgruppen wurden eingeführt. Es verblieben keine freien OH-Gruppen. Es wurden 25 g des Produkts als weißes Pulver erhalten.

### Beispiel 9

### Synthese eines Cellulose-Acrylat-Acetat-Propionats aus Cellulose und einer gemäß Beispiel 1 synthetisierten Anhydridmischung mit Verwendung von Zinkchlorid als Katalysator

In einen trockenen 100 ml Dreihalskolben mit Magnet-Rührkörper wurden 1,2 g Cellulose (Biozellstoff aus Baumwollfasern) gegeben. Dann wurde der Kolben im Vakuum getrocknet und anschließend mit Stickstoff gefüllt. Dann wurden 10 mg Phenothiazin hinzugefügt. Anschließend wurden 12 g Acrylsäure zugegeben und 3 min vorsichtig gerührt. Dann wurden 7 g des gemäß Beispiel 1 synthetisierten Acrylsäureanhydrids sowie 0,36 g Propionsäureanhydrid hinzugefügt und wenige Minuten gerührt, wobei eine gute Benetzung der Watte erreicht wurde. Dann wurden bei Raumtemperatur 0,25 g Zinkchlorid zugefügt (Kolben unter Stickstoff). Der Zellstoff saugte fast die gesamte Menge an Reagenzien auf. Nun wurde 10 Minuten bei Raumtemperatur gerührt und dann wurde die Temperatur innerhalb von 40 Minuten auf 57 °C erhöht. 10 Minuten später wurde die Temperatur auf 63 °C erhöht. Eine Stunde später wurde die Temperatur auf 75°C erhöht. Nachdem weitere 0,3 g Zinkchlorid hinzugegeben worden waren, wurde die Temperatur auf 85 °C erhöht. Nun bildete sich immer mehr Flüssigkeit und die Watte wurde immer weniger. Bei diesen Bedingungen verblieb die Reaktionsmischung weitere anderthalb Stunden. Die Reaktionsmischung wurde auf 87°C erwärmt, wobei sie homogen wurde. Nach zwei Stunden wurde die Temperatur auf 90 °C erhöht, und verblieb in diesem Zustand etwa 40 Minuten, bevor die Heizung ausgestellt wurde.

Die Reaktionsmischung wurde in 80 ml Cyclohexan bei 50 °C eingerührt, wobei das Produkt als bräunlicher Feststoff ausfiel. Anschließend wurde dekantiert. Danach wurden dem Produkt 80 ml Methyl-tert-butylether hinzugefügt und diese Mischung unter starkem Rühren auf 55°C erwärmt. Sobald diese Mischung abgekühlt war wurde erneut dekantiert. Dieser Vorgang wurde noch drei weitere Male durchgeführt bevor das Produkt etwa zwei Stunden bei 55°C im Feinvakuum getrocknet wurde.

Es wurden 1,3 g Cellulose-Acrylat-Acetat-Propionat erhalten, dessen NMR-Spektren denen des Produkts von Beispiel 8 nahezu identisch sind (ca. 70% der OH-Gruppen mit Acrylatgruppen verestert, restliche OH-Gruppen wurden mit Propionat- und Acetatgruppen verestert).

### Beispiel 10

### Synthese eines phosphorhaltigen Celluloseesters aus dem Cellulose-Acrylat-Acetat-Propionat von Beispiel 8 und phosphoryliertem Anhydroerythrit (PAHE)

Das für diese Synthese benötigte phosphorylierte Anhydroerythrit (PAHE) wurde aus Erythrit und Dimethylphosphit mittels einer literaturbekannten Synthesemethode hergestellt (G. Lapienis, St. Penczek, Journal of Polymer Science: Part A: Polymer Chemistry, 1990, 28, 1743-1762).

Bei einem mit einem schweren Rührkern ausgestatteten 250ml Schlenkkolben wurde die Öffnung mit einem Septum verschlossen und dieser an die Schlenk-Line angeschlossen. Danach wurde mit Hilfe einer Drehschieberpumpe Vakuum angelegt und der Kolben mit einem Heißluftföhn erwärmt um Feuchtigkeitsspuren zu entfernen und anschließend wurde der Kolben mit Stickstoff gefüllt. Dieser Vorgang wurde dreimal wiederholt, bevor im Stickstoffgegenstrom 9 g des Celluloseesters von Beispiel 8 sowie ca. 0,05g Phenothiazin in den Kolben gegeben wurden. Nun wurden durch das Septum 75 ml Acetonitril gegeben und diese Mischung unter starkem Rühren und unter Stickstoff auf 60°C mit Hilfe eines Ölbads und eines Magnetheizrührers erwärmt. Es löste sich der größte Teil des Ausgangsstoffs. Dann wurden 12 ml Triethylamin hinzugefügt und die Temperatur weiter bis auf 70°C gesteigert. Als das Ölbad 70°C erreicht hatte, wurde mithilfe einer Spritze und einer Kanüle über einen Zeitraum von 40 Minuten eine etwas erwärmte Lösung aus 7,68g PAHE und ca. 24,7 g Acetonitril durch das Septum hinzugegeben. Nachdem die komplette Mischung hinzugegeben war, wurde die Ölbadtemperatur auf 78°C erhöht. Bei diesen Bedingungen verblieb die Reaktionsmischung 70 min. Inzwischen war die Mischung fast völlig klar und ihre Farbe war nun hellgelb. Dann wurde eine Lösung aus 1,5 g PAHE in 3,7 g Acetonitril hinzugefügt und weitere drei Stunden bei unveränderten Bedingungen gerührt. Die Lösung wurde noch 1 h bei unveränderten Bedingungen gerührt. Danach wurde das Ölbad entfernt, der Stickstoffstrom und der Rührmagnet ausgestellt und der Kolben wurde gut verschlossen 12 Stunden bei Raumtemperatur gelagert.

Danach wurde ein Teil der flüchtigen Bestandteile (ca. 35 ml) in eine Kühlfalle destilliert und dabei leicht erwärmt. Der ölige Destillationsrückstand wurde unter kräftigem Rühren mittels Spritze innerhalb von 25 min in 225 ml trockenes Toluol gerührt (Argon-Atmosphäre), wobei zum Schluss auf ca. 50°C (Ölbadtemperatur) erwärmt wurde. Wenige Minuten nach Beendigung der Zugabe wurde das Ölbad entfernt. Nicht zugegeben wurde eine geringe Menge Feststoff, welcher in dem Kolben, indem zuvor die Produktlösung war, verblieb. Zum Ende der Zugabe war jedoch ein zäher rötlich-bräunlicher Bodenkörper entstanden. Es wurde von der Toluolphase dekantiert. Nun wurde das Rohprodukt in 35 ml trockenem Acetonitril unter Erwärmen (Ölbad 60°C) gelöst. Die so erhaltene viskose Lösung wurde mittels Spritze portionsweise innerhalb von 20 min in 125 ml trockenes Toluol gegeben (unter Stickstoff), wobei kräftig gerührt wurde. In gleicher Weise wurde eine dritte und vierte Umfällung durchgeführt. Das so erhaltene Produkt wurde 1,5 h im Feinvakuum auf 100°C erwärmt. Das Erwärmen wurde zweimal unterbrochen um Brocken zu zerkleinern. Nach etwa einer Stunde war ein Pulver erhalten worden, welches kräftig gerührt wurde. Nun wurde das Trocknen bei einer Ölbadtemperatur von 130°C fortgeführt (zweieinhalb Stunden). Schließlich wurde noch 30 min bei 135°C im Feinvakuum getrocknet.

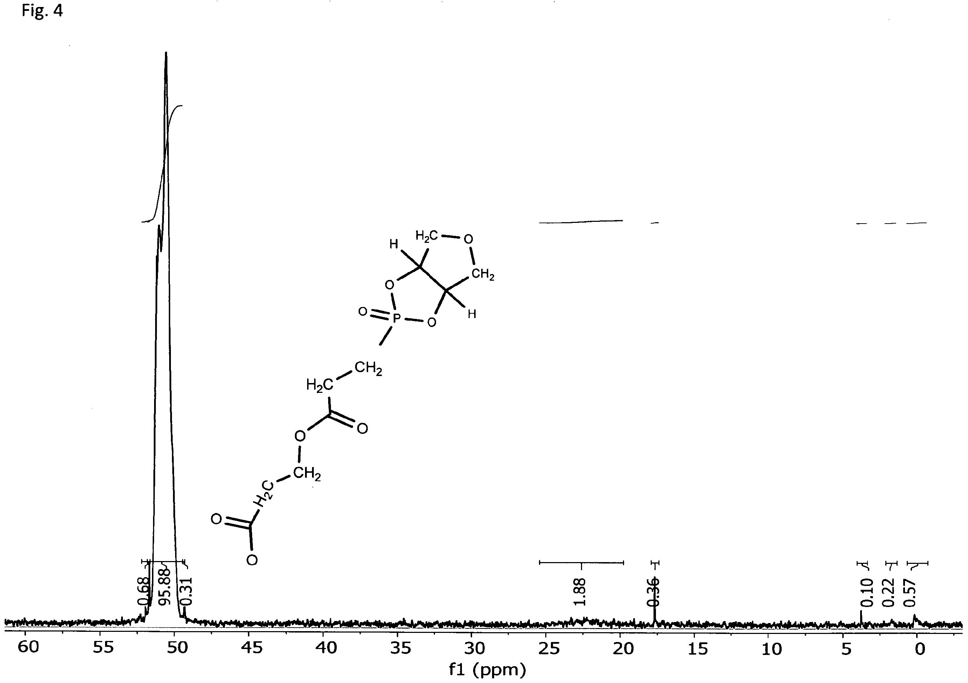

Im ³¹P-NMR-Spektrum des so erhaltenen Produktes umfasst das Produktsignal etwa. 96 mol% der P-Verbindungen (siehe Fig 4). Das Protonenspektrum zeigte einen Umsatz der Acrylatfunktionalitäten von ≥ 95 %.

Es wurden 14,5 g eines weißen Pulvers erhalten (12 g an die Hochschule Hamm-Lippstadt versendet). Die isolierte Ausbeute beträgt etwa 84 % (theoretische Ausbeute: etwa 17,3 g).

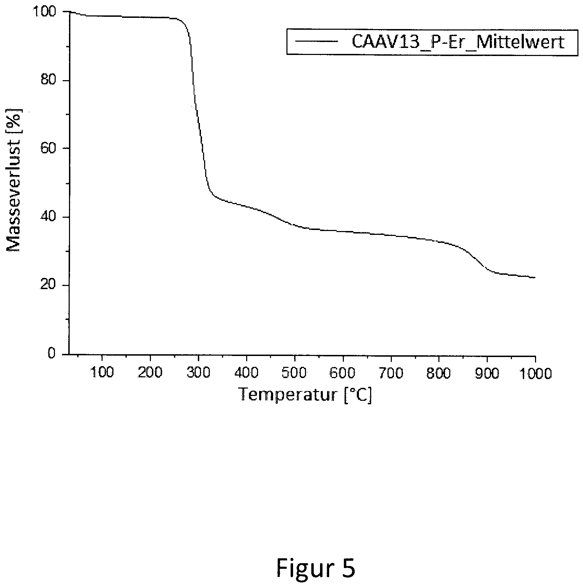

Die Thermoanalyse dieses Produktes zeigt einen Zersetzungsbeginn bei etwa 250°C (siehe Fig. 5, dreifach gemessen).

### Beispiel 11

### Synthese eines phosphorhaltigen Celluloseesters aus dem Cellulose-Acrylat-Acetat-Propionat von Beispiel 8 und DOPO

Ein mit einem KPG-Rührer ausgestatteter 500 ml Dreihals-Schlenkkolben wurde im Vakuum erwärmt um Feuchtigkeitsspuren zu entfernen und anschließend mit Stickstoff gefüllt. Dann wurden im Stickstoffgegenstrom 8,7 g des in Beispiel 8 erhaltenen Cellulose-Acrylat-Acetat-Propionats, ca. 100 mg Phenothiazin, 120 ml trockenes Acetonitril sowie 12 ml trockenes Triethylamin gegeben. Diese Mischung wurde mittels Ölbad und Magnetheizrührer unter kräftigem Rühren auf 70-75°C erwärmt.

Dann wurden im Stickstoffgegenstrom eine Lösung von 12 g DOPO in Acetonitril im Verlauf von 45 min mithilfe einer Spritze unter Rühren hinzugegeben. Es wurde zwei Stunden unter Stickstoff-Atmosphäre bei 75°C gerührt, wobei das Produkt ausfiel.

Eine NMR-Probe vom ausgefallenen Produkt zeigte, dass etwa. 97,5 % der Phosphorkomponenten zum Produkt gehören und der Umsatz der Acrylat-Funktionalitäten nahezu vollständig war (≥ 97%).

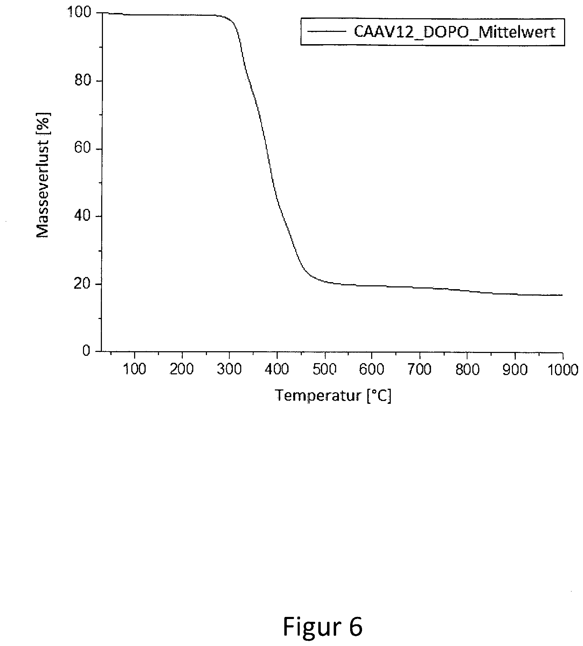

Das Rohprodukt wurde zweimal mit Acetonitril ausgekocht und dann im Feinvakuum getrocknet, wobei bis auf 135°C erwärmt wurde. Es wurden 12 g des DOPO-funktionalisierten Celluloseesters erhalten, dessen Thermoanalyse einen Zersetzungsbeginn von etwa 300°C zeigte (siehe TGA-Kurve in Fig. 6, dreifach gemessen).

### Beispiel 12

### Synthese eines phosphorhaltigen Celluloseesters aus dem Cellulose-Acrylat-Acetat-Propionat von Beispiel 9 und phosphoryliertem Anhydroerythrit (PAHE)

In einem mit Stickstoff gefüllten Kolben wurden 2g PAHE in 8 ml trockenem Acetonitril gelöst.

Bei einem mit einem schweren Rührkern ausgestatteten 100ml Schlenkkolben wurde die Öffnung mit einem Septum verschlossen und dieser an die Schlenk-Line angeschlossen. Danach wurde mit Hilfe einer Drehschieberpumpe Vakuum angelegt und der Kolben mit einem Heißluftföhn erwärmt um Feuchtigkeitsspuren zu entfernen und anschließend wurde der Kolben mit Stickstoff gefüllt. Dieser Vorgang wurde dreimal wiederholt, bevor im Stickstoffgegenstrom 1g des Cellulose-Acrylat-Acetat-Propionats von Beispiel 9 sowie 10 mg Phenothiazin in den Kolben gegeben wurden. Anschließend wurde der Kolben wieder verschlossen und erneut Vakuum angelegt und anschließend mit Stickstoff gefüllt. Nun wurden durch das Septum 12ml Acetonitril und 1,3ml Triethylamin gegeben und diese Mischung unter starkem Rühren und unter Stickstoff auf 70°C mit Hilfe eines Ölbads und eines Magnetheizrührers erwärmt. Sobald das Ölbad die 70°C erreicht hatte, wurde mit einer Spritze und einer Kanüle im Verlauf von 40 Minuten 4,12g der vorher hergestellten PAHE-Lösung durch das Septum hinzugegeben. Nachdem die komplette Mischung hinzugegeben war, wurde die Ölbadtemperatur auf 78°C erhöht. Die Reaktionsmischung verblieb 4,5h bei diesen Bedingungen. Anschließend wurde das Ölbad entfernt und die Mischung 12h bei Raumtemperatur gelagert.

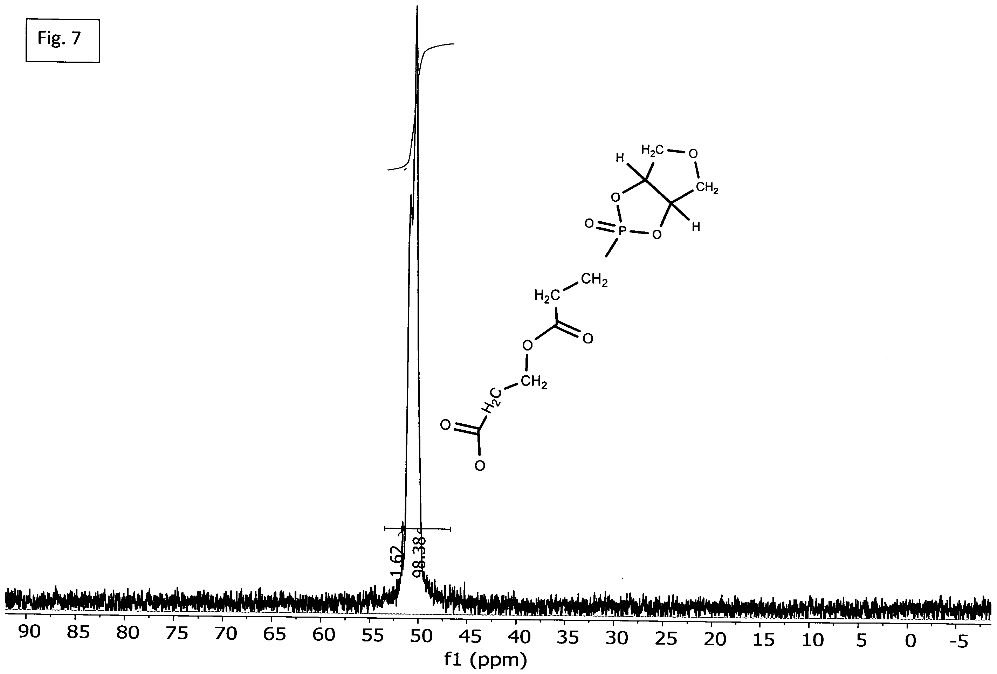

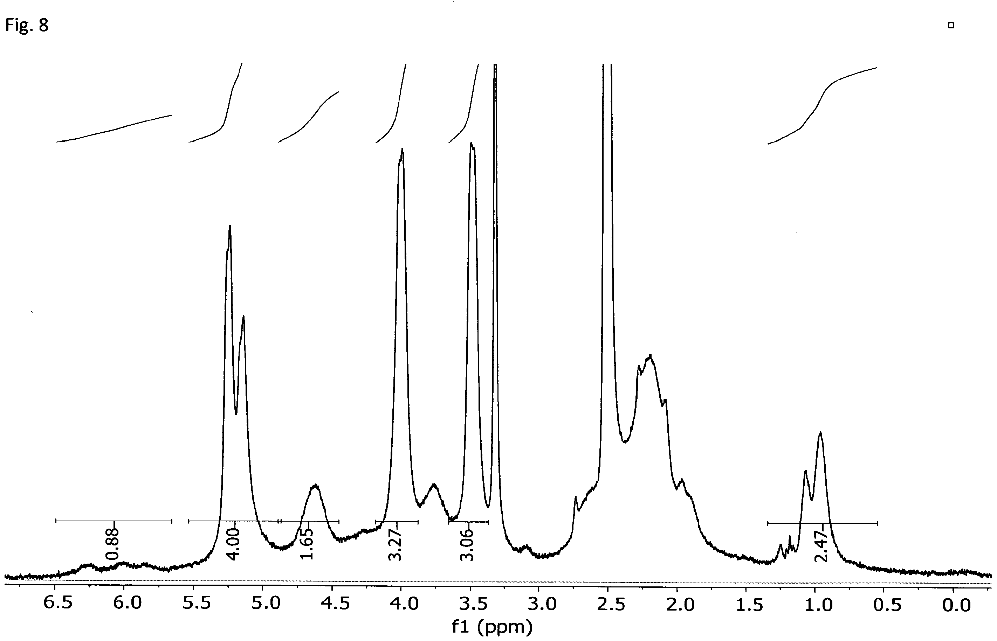

Dann wurde ein Teil der flüchtigen Bestandteile in eine Kühlfalle destilliert (ca. 10ml) und dabei leicht erwärmt. Nachdem die Reaktionsmischung etwas abgekühlt war, wurde sie vorsichtig (zusammen mit dem Feststoff der sich bei der Reaktion gebildet hatte) im Stickstoffgegenstrom und unter starkem Rühren in einen mit 25ml Toluol gefüllten Schlenkkolben gegeben (dieses wurde hierbei mittels Ölbad auf 50°C erwärmt). Es fiel ein brauner Feststoff aus. Anschließend wurde das über dem Feststoff stehende Lösungsmittel dekantiert und der Feststoff erneut in 4ml Acetonitril gelöst. Nachdem er sich gelöst hatte wurde die Mischung vorsichtig im Stickstoffgegenstrom und unter starkem Rühren in einen mit 25ml Toluol gefüllten Schlenkkolben gegeben (dieses wurde hierbei mittels Ölbad auf 50°C erwärmt). Anschließend wurde das über dem Feststoff stehende Lösungsmittel dekantiert. Dieser Vorgang wurde noch ein weiteres Mal wiederholt. Das Produkt wurde 4h im Feinvakuum getrocknet, wobei allmählich bis 155°C erwärmt wurde. Das Produkt wurde als weißes Pulver erhalten. Das ³¹P-NMR-Spektrum (Fig. 7) dieses phosphorhaltigen Celluloseesters sowie dessen 1H-NMR-Spektrum (Fig. 8) zeigten eine sehr gute Reinheit. Die Thermoanalyse zeigte einen Zersetzungsbeginn bei etwa 275°C.

### Beispiel 13

### Flammschutzuntersuchungen:

Der in Beispiel 10 erhaltene PAHE-funktionalisierte Celluloseester sowie der in Beispiel 11 erhaltene DOPO-funktionalisierte Celluloseester wurden mittels eines Microextruders in Polyamid 11 (von Sigma-Aldrich) sowie in das teilbiobasierte Polyamid RX 2298 (Produkt des Unternehmens BASF SE) eingearbeitet. Die Extrusionstemperatur betrug in beiden Fällen 220°C. Aus den so erhaltenen Granulaten wurden UL94-V Brandstäbe (1,6 mm) spritzgegossen und die Prüfstäbe einer Brandprüfung nach DIN EN 60695-11-10 unterzogen. Zum Vergleich wurden auch flammschutzmittelfreie Probekörper derselben Abmessung auf gleiche Weise hergestellt und untersucht. Bei Verwendung des PAHE-funktionalisierte Celluloseesters betrug die Flammschutzmittel-Konzentration (Beladung) 18 Masse% und bei Verwendung des DOPO-funktionalisierten Celluloseesters 20 Masse%.

Zudem wurde der DOPO-funktionalisierte Celluolseester in Polyethylenterephthalat (BISNEINEX; Produkt der Firma Equipolymers) in analoger Weise eingearbeitet (Extrusionstemperatur 260°C).

Vor dem Extrusionsprozess wurden die Polymergranulate mit einer Kryomühle von Retsch zerkleinert. Hierbei wurden die Polymergranulate unter kryogenen Temperaturen für 5 - 10 Minuten bei einer Frequenz von 30 Hz gemahlen. Für die Extrusion wurde ein Kleinextruder HAAKE MiniLab II von Thermo Scientific eingesetzt. Für das Herstellen der UL94-Prüfkörper wurde der HAAKE MiniJet PRO von Thermo Scientific verwendet. Für die Bestimmung der der Brandwidrigkeit wurde die HVUL2-Brandkammer von Atlas verwendet.

Die Flammschutzadditive sowie die nach dem Mahlen erhaltenen Polymerpulver wurden vor dem Extrusionsprozess im Vakuum getrocknet.

Die UL94-V-Tests ergaben folgende Resultate:

| Polymer | Additiv | Additiv-Konzentration (Masse%) | Brenndauer 1. und 2. Beflammung (s) | Brennendes Abtropfen | UL94-V-Klassifizierung |
|---|---|---|---|---|---|
| RX 2298 | - | - | 1. 2-9 | Ja | V2 |
| | | | 2. 4-11 | | |
| RX 2298 | Bsp. 8 | 18 | 1. ≤ 0,5 | Nein | V0 |
| | | | 2. ≤ 0,5 | | |
| RX 2298 | Bsp. | 20 | 1. ≤ 1,0 | Ja | V2 |
| | 10 | | 2. ≤ 1,0 | | |
| PA 11 | - | - | 1. 1-3 | Ja | V2 |
| | | | 2. 2-3 | | |
| PA 11 | Bsp. | 20 | 1. ≤ 0,5 | Nein | V0 |
| | 10 | | 2. ≤ 0,5 | | |
| PET | - | - | 1. 2-3 | Ja | V2 |
| | | | 2. 3-4 | | |
| PET | Bs. 10 | 10 | 1. ≤ 0,5 | Nein | V0 |
| | | | 2. ≤ 0,5 | | |

Diese Versuche zeigen eine gute Flammschutzwirkung der erfindungsgemäßen Flammschutzadditive. In allen drei Polymeren konnte die bestmögliche Flammschutz-Klassifizierung V0 erreicht werden.

## Patentansprüche

1. Cellulosederivat der allgemeinen Formel I 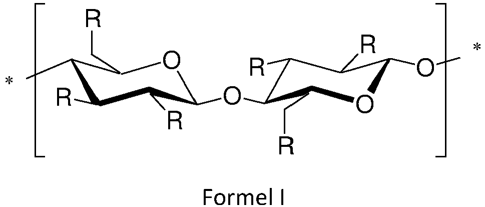 wobei
R bei jedem Auftreten gleich oder verschieden ist und ausgewählt ist aus der Gruppe bestehend aus Hydroxylgruppen, Resten der allgemeinen Formel II und Resten der allgemeinen Formel III 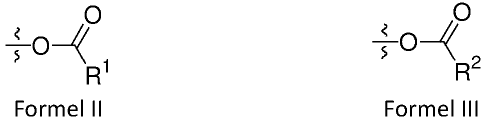
wobei
R¹ bei jedem Auftreten gleich oder verschieden ist und ausgewählt ist aus der Gruppe bestehend aus phosphorhaltigen Substituenten, und
R² bei jedem Auftreten gleich oder verschieden ist und ausgewählt ist aus der Gruppe bestehend aus linearen oder verzweigten Alkylresten mit 1 bis 36 Kohlenstoffatomen, linearen oder verzweigten Arylalkylresten mit 7 bis 36 Kohlenstoffatomen,
mit der Maßgabe, dass in Formel I zumindest ein Rest R ein Rest gemäß Formel II ist, **dadurch gekennzeichnet, dass** in der allgemeinen Formel II der Rest R¹ ausgewählt ist aus der Gruppe bestehend aus Resten gemäß der allgemeinen Formel IV 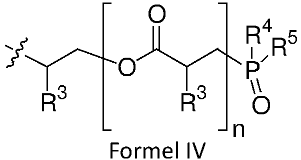
wobei bei jedem Auftreten die Variablen gleich oder verschieden sind und
R³ ausgewählt ist aus der Gruppe bestehend aus Wasserstoff oder linearen oder verzweigten Alkylresten mit 1 bis 36, bevorzug 1 bis 6 Kohlenstoffatomen,
R⁴ und R⁵ unabhängig voneinander ausgewählt sind aus der Gruppe bestehend aus Alkylresten, Arylresten, Alkylarylresten, Arylalkylresten, O-Alkylresten, O-Arylresten, O-Alkylarylresten, N-Alkylresten, N-Arylresten, N-Arylalkylresten, N-Alkylarylresten, wobei R⁴ und R⁵ sowie das Phosphoratom auch Bestandteil heterocyclischer Ringsysteme sein kann, welches ein- oder mehrgliedrig sein können, sowie
n 0 oder eine ganze Zahl von 1 bis 3 ist.

2. Cellulosederivat nach vorhergehendem Anspruch, **dadurch gekennzeichnet, dass** das heterocyclische Ringsystem ausgewählt ist aus der Gruppe bestehend aus den nachfolgenden Gruppierungen: 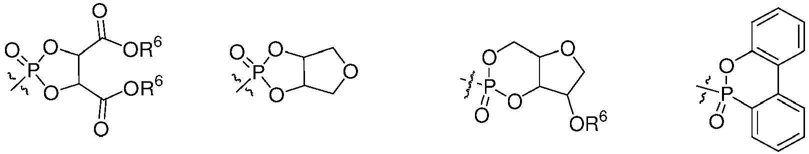 wobei
R⁶ unabhängig voneinander ausgewählt ist aus der Gruppe bestehend aus Alkylresten, Arylresten, Alkylarylresten, Arylalkylresten, O-Alkylresten, O-Arylresten, O-Alkylarylresten, N-Alkylresten, N-Arylresten, N-Arylalkylresten und N-Alkylarylresten; bevorzugt Alkylresten mit 1 bis 12 Kohlenstoffatomen oder Alkylrylresten mit 7 bis 14 Kohlenstoffatomen.

3. Cellulosederivat nach einem der vorhergehenden Ansprüche, **dadurch gekennzeichnet, dass**
R² bei jedem Auftreten gleich oder verschieden ist und ausgewählt ist aus der Gruppe bestehend aus linearen oder verzweigten Alkylresten mit 1 bis 12 Kohlenstoffatomen, linearen oder verzweigten Arylalkylresten mit 7 bis 14 Kohlenstoffatomen.

4. Cellulosederivat nach einem der vorhergehenden Ansprüche, **dadurch gekennzeichnet, dass** bezogen auf sämtliche Reste R der molare Anteil
der Reste gemäß Formel II mindestens 2 mol-%, bevorzugt 5 bis 100 mol-%, weiter bevorzugt 15 bis 95 mol-%, besonders bevorzugt 40 bis 90 mol.-%,
der Reste gemäß Formel III 0 bis 98 mol-%, bevorzugt 0 bis 95 mol-%, weiter bevorzugt 5 bis 85 mol-%, besonders bevorzugt 10 bis 90 mol.-% und/oder
der Hydroxygruppen maximal 50 mol-%, bevorzugt 0 bis 50 mol-%, bevorzugt 0 bis 20 mol-%, besonders bevorzugt 0 bis 10 mol.-% beträgt.

5. Verfahren zur Herstellung eines Cellulosederivats nach einem der vorhergehenden Ansprüche, durch
a) Veresterungs- und/oder Umesterungsreaktion gefolgt von einer Addition mindestens einer einen phosphorhaltigen Substituenten enthaltenden Verbindung, wobei
in einem ersten Schritt
• Cellulose zumindest teilweise mit mindestens einem Veresterungsreagenz, das die Hydroxylgruppen der Cellulose zu Resten R' verestert, wobei R' ein Rest der allgemeinen Formel V ist 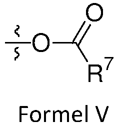 wobei R⁷ eine gegenüber der mindestens einen phosphorhaltigen Substituenten enthaltenden Verbindung reaktive Funktionalität ist, oder
• ein Celluloseester aus der allgemeinen Formel I wie in Anspruch 1 definiert, mit der Maßgabe, dass
R bei jedem Auftreten gleich oder verschieden ist und ausgewählt ist aus der Gruppe bestehend Resten der allgemeinen Formel III,
zumindest teilweise mit mindestens einem Umesterungsreagenz, das die Reste gemäß der allgemeinen Formel III zu Resten der allgemeinen Formel V umestert, oder
• ein gemischter Celluloseester der allgemeinen Formel I wie in Anspruch 1 definiert, mit der Maßgabe, dass
R bei jedem Auftreten gleich oder verschieden ist und ausgewählt ist aus der Gruppe bestehend aus Hydroxylgruppen und Resten der allgemeinen Formel III, wobei der gemischte Celluloseester sowohl Hydroxylgruppen als auch Reste R der allgemeinen Formel III umfasst,
mit mindestens einem Reagenz, das die Hydroxylgruppen des gemischter Celluloseesters zu Resten der allgemeinen Formel V verestert und/oder die Reste gemäß der allgemeinen Formel III zu Resten der allgemeinen Formel V umestert,
umgesetzt wird, und
in einem anschließenden zweiten Schritt mindestens eine, einen phosphorhaltigen Substituent enthaltende Verbindung an die reaktive Funktionalität R⁷ der allgemeinen Formel V addiert wird,
oder
b) durch Veresterung bzw. Umesterung, wobei
• Cellulose zumindest teilweise mit mindestens einem Veresterungsreagenz, das die Hydroxylgruppen der Cellulose zu Resten R wie in Anspruch 1 definiert, verestert, wobei bezogen auf die gesamte Cellulose zumindest eine Hydroxylgruppe zu einer Estergruppe gemäß Formel II verestert wird, oder
• ein Celluloseester der allgemeinen Formel I wie in Anspruch 1 definiert, mit der Maßgabe, dass
R bei jedem Auftreten gleich oder verschieden ist und ausgewählt ist aus der Gruppe bestehend Resten der allgemeinen Formel III,
zumindest teilweise mit mindestens einem Umesterungsreagenz, das die Reste gemäß der allgemeinen Formel III zu Resten der allgemeinen Formel II umestert, oder
• ein gemischter Celluloseester der allgemeinen Formel I wie in Anspruch 1 definiert, mit der Maßgabe, dass
R bei jedem Auftreten gleich oder verschieden ist und ausgewählt ist aus der Gruppe bestehend aus Hydroxylgruppen und Resten der allgemeinen Formel III wie in Anspruch 1 definiert, wobei der gemischte Celluloseester sowohl Hydroxylgruppen als auch Reste R der allgemeinen Formel III umfasst,
mit mindestens einem Reagenz, das die Hydroxylgruppen des gemischten Celluloseesters zu Resten der allgemeinen Formel I wie in Anspruch 1 definiert verestert und/oder die Reste gemäß der allgemeinen Formel III zu Resten der allgemeinen Formel I umestert,
wobei bezogen auf das gesamte Cellulosederivat zumindest eine Hydroxylgruppe zu einer Estergruppe gemäß Formel II verestert und/oder zumindest teilweise die Reste gemäß der allgemeinen Formel III zu Resten der allgemeinen Formel II umgeestert werden,
umgesetzt wird.

6. Verfahren nach vorhergehendem Anspruch, **dadurch gekennzeichnet, dass** bei der
a) Veresterungs- und/oder Umesterungsreaktion gefolgt von einer Addition mindestens einer einen phosphorhaltigen Substituenten enthaltenden Verbindung
im ersten Schritt das mindestens eine Veresterungsreagenz, das mindestens eine Umesterungsreagenz bzw. das mindestens eine Reagenz zumindest eine Verbindung, ausgewählt aus den Verbindungen der allgemeinen Formel Vla und/oder VIb 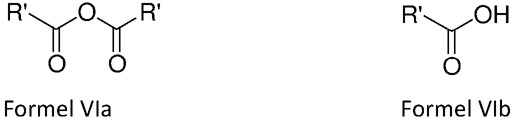 beinhaltet oder hieraus besteht, wobei
in Formel Vla
R' bei jedem Auftreten gleich oder verschieden ist und ausgewählt ist aus Resten gemäß der allgemeinen Formel VIIa und VIIb und Resten R² wie in Anspruch 1 definiert 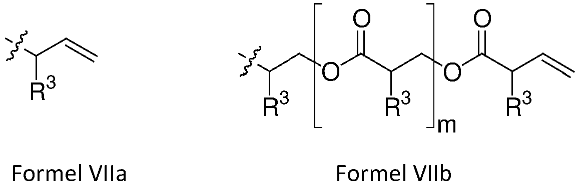 wobei R³ wie in Anspruch 1 definiert ist, mit der Maßgabe, dass zumindest ein Rest R' gemäß Formel VIIa oder Vllb ist, und m 0, 1 oder 2 ist, sowie
in Formel VIb
R' ausgewählt ist aus Resten gemäß der allgemeinen Formel VIIa und Vllb,
und
im anschließenden zweiten Schritt die mindestens eine, einen phosphorhaltigen Substituent enthaltende Verbindung ausgewählt ist aus der Gruppe bestehend aus Verbindungen der allgemeinen Formel VIII 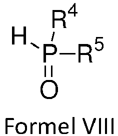
wobei R⁴ und R⁵ wie in Anspruch 1 definiert sind,
oder
b) bei der Veresterung bzw. Umesterung
im ersten Schritt das mindestens eine Veresterungsreagenz, das mindestens eine Umesterungsreagenz bzw. das mindestens eine Reagenz zumindest eine Verbindung, ausgewählt aus den Verbindungen der allgemeinen Formel Vla und/oder VIb 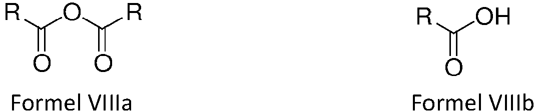
beinhaltet oder hieraus besteht, wobei
in Formel VIIIa
R bei jedem Auftreten gleich oder verschieden ist und ausgewählt ist aus Resten gemäß der allgemeinen Formel IV wie in Anspruch 1 und Resten R² wie in Anspruch 1 definiert, sowie
in Formel Vlllb
R ausgewählt ist aus Resten gemäß der allgemeinen Formel IV wie in Anspruch 1 definiert.

7. Verfahren nach einem der beiden vorhergehenden Ansprüche, **dadurch gekennzeichnet, dass** in den Varianten a) oder b) bezogen auf die Gesamtheit der
Hydroxygruppen der Cellulose
Estergruppen des Celluloseesters bzw.
Hydroxygruppen und der Estergruppen des gemischten Celluloseesters 0,1 bis 20, bevorzugt 0,5 bis 10, besonders bevorzugt 1,0 bis 5,0 mol-Äquivalente des mindestens einen Veresterungsreagenzes, des mindestens einen Umesterungsreagenzes bzw. des mindestens einen Reagenzes eingesetzt werden.

8. Verfahren nach einem der Ansprüche 5 bis 7, **dadurch gekennzeichnet, dass** in Variante a), bezogen auf die Menge der Reste der allgemeinen Formel V, 0,05 bis 10, bevorzugt 0,1 bis 5, besonders bevorzugt 0,25 bis 1,0 mol-Äquivalente der mindestens einen, einen phosphorhaltigen Substituent enthaltenden Verbindung eingesetzt werden.

9. Verfahren nach einem der Ansprüche 5 bis 8, **dadurch gekennzeichnet, dass** die Versterung/Umesterung in Gegenwart von Umesterungs- bzw. Veresterungskatalysatoren durchgeführt wird.

10. Verwendung eines Cellulosederivats der allgemeinen Formel I 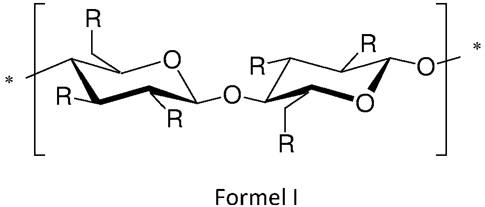 wobei
R bei jedem Auftreten gleich oder verschieden ist und ausgewählt ist aus der Gruppe bestehend aus Hydroxylgruppen, Resten der allgemeinen Formel II und Resten der allgemeinen Formel III 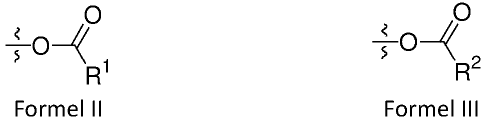
wobei
R¹ bei jedem Auftreten gleich oder verschieden ist und ausgewählt ist aus der Gruppe bestehend aus phosphorhaltigen Substituenten, und
R² bei jedem Auftreten gleich oder verschieden ist und ausgewählt ist aus der Gruppe bestehend aus linearen oder verzweigten Alkylresten mit 1 bis 36 Kohlenstoffatomen, linearen oder verzweigten Arylalkylresten mit 7 bis 36 Kohlenstoffatomen,
mit der Maßgabe, dass in Formel I zumindest ein Rest R ein Rest gemäß Formel II ist,
als Flammschutzmittel, bevorzugt für Kunststoffe, insbesondere für Thermoplasten, wie ungefüllte und gefüllte bzw. verstärkte Polyester, Polyamide, Polyolefine, Polycarbonate, PMMA, Polystyrol, Styrol-Blockpolymere wie ABS und SBS, für Celluloseester wie Celluloseacetat, Cellulosepropionat und Cellulosebutyrat sowie für Polyurethane und Epoxidharze.

11. Flammschutzzusammensetzung, umfassend oder bestehend aus mindestens einem Cellulosederivat der allgemeinen Formel I 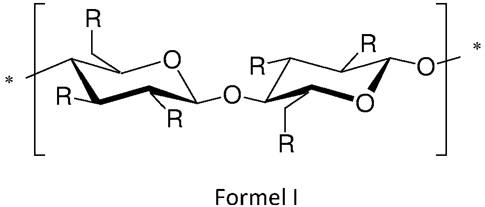 wobei
R bei jedem Auftreten gleich oder verschieden ist und ausgewählt ist aus der Gruppe bestehend aus Hydroxylgruppen, Resten der allgemeinen Formel II und Resten der allgemeinen Formel III 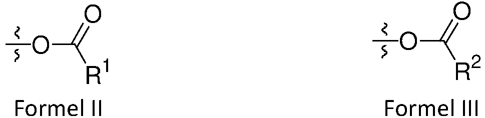
wobei
R¹ bei jedem Auftreten gleich oder verschieden ist und ausgewählt ist aus der Gruppe bestehend aus phosphorhaltigen Substituenten, und
R² bei jedem Auftreten gleich oder verschieden ist und ausgewählt ist aus der Gruppe bestehend aus linearen oder verzweigten Alkylresten mit 1 bis 36 Kohlenstoffatomen, linearen oder verzweigten Arylalkylresten mit 7 bis 36 Kohlenstoffatomen,
mit der Maßgabe, dass in Formel I zumindest ein Rest R ein Rest gemäß Formel II ist,
sowie mindestens einem weiteren, sich vom Cellulosederivat der allgemeinen Formel I unterscheidenden Flammschutzmittel.

12. Flammschutzzusammensetzung nach vorhergehendem Anspruch, **dadurch gekennzeichnet, dass** das mindestens eine weiteren, sich vom Cellulosederivat der allgemeinen Formel I unterscheidende Flammschutzmittel ausgewählt ist aus der Gruppe bestehend aus Metallhydroxiden, Melaminderivaten, Stickstoffbasen, Phosphaten, Phosphonaten, Phosphinaten, Pyrophosphaten, Polyphosphaten, Siloxanen, Pentaerythritol sowie Derivaten dieser Verbindungen, vorzugsweise Magnesiumhydroxid, Aluminiumhydroxid, Böhmit, Melaminpolyphosphat, Ammoniumpolyphosphat, Melamincyanurat, Zinkpyrophosphat, Piperazinpyrophosphat und Piperazinpolyphosphat, 1,3,5-Tris(2-hydroxyethyl)isocyanurat sowie Mischungen und Kombinationen hiervon.

13. Kunststoffzusammensetzung, umfassend oder bestehend aus mindestens einem Kunststoff, bevorzugt mindestens einem thermoplastischem Kunststoff, sowie mindestens einem Cellulosederivat der allgemeinen Formel I nach einem der Ansprüche 1 bis 4 oder einer Flammschutzzusammensetzung nach einem der Ansprüche 11 oder 12.

## Claims

1. A cellulose derivate of the general Formula I 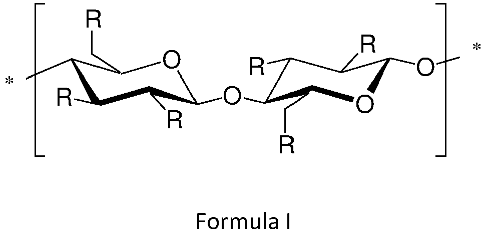 wherein
R being the same or different on each occurrence and being selected from the group consisting of hydroxyl groups, moieties of the general formula II and moieties of the general formula III 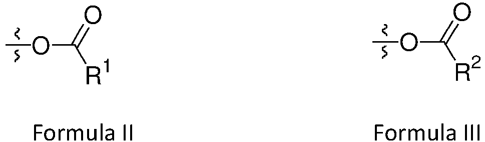
R¹ being identical or different on each occurrence and being selected from the group consisting of phosphorus-containing substituents, and
R² being identical or different on each occurrence and being selected from the group consisting of linear or branched alkyl moieties having 1 to 36 carbon atoms, linear or branched arylalkyl moieties having 7 to 36 carbon atoms,
with the proviso that in formula I, at least one moiety R is a moiety according to formula II, **characterized in that** in the general formula II, the moiety R¹ is selected from the group consisting of moieties according to the general formula IV 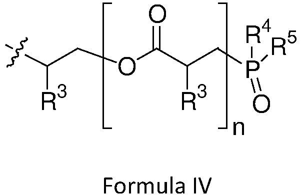 wherein the variables are the same or different at each occurrence and
R³ is selected from the group consisting of hydrogen or linear or branched alkyl moieties having 1 to 36, preferably 1 to 6 carbon atoms,
R⁴ and R⁵ are independently selected from the group consisting of alkyl moieties, aryl moieties, alkyl aryl moieties, arylalkyl moieties, O-alkyl moieties, O-aryl moieties, O-alkyl aryl moieties, N-alkyl moieties, N-aryl moieties, N-arylalkyl moieties, N-alkyl aryl moieties, wherein R⁴ and R⁵ and the phosphorus atom can also be part of heterocyclic ring systems, which can be single or multi-membered, and
n is 0 or an integer from 1 to 3.

2. The cellulose derivate according to the previous claim, **characterized in that** the heterocyclic ring system is selected from the group consisting of the following moieties: 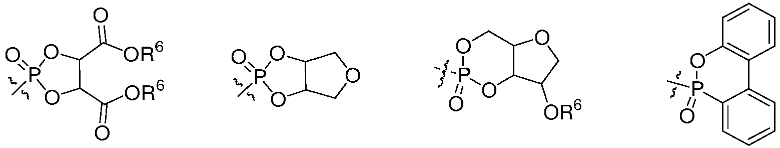 wherein
R⁶ is independently selected from the group consisting of alkyl moieties, aryl moieties, alkyl aryl moieties, arylalkyl moieties, O-alkyl moieties, O-aryl moieties, O-alkyl aryl moieties, N-alkyl moieties, N-aryl moieties, N-arylalkyl moieties and N-alkyl aryl moieties; preferably alkyl moieties having 1 to 12 carbon atoms or alkyl aryl moieties having 7 to 14 carbon atoms.

3. The cellulose derivative according to any one of the preceding claims, **characterized in that**
R² is identical or different on each occurrence and is selected from the group consisting of linear or branched alkyl moieties having 1 to 12 carbon atoms, linear or branched arylalkyl moieties having 7 to 14 carbon atoms.

4. The cellulose derivative according to any one of the preceding claims, **characterized in that** based on all moieties R, the molar proportion
of the moieties according to formula II is at least 2 mol%, preferably 5 to 100 mol%, more preferably 15 to 95 mol%, particularly preferably 40 up to 90 mol%,
of the moieties according to formula III, is 0 to 98 mol%, preferably 0 to 95 mol%, more preferably 5 to 85 mol%, particularly preferably 10 to 90 mol% and/or
the hydroxyl groups is a maximum of 50 mol%, preferably 0 to 50 mol%, preferably 0 to 20 mol%, particularly preferably 0 to 10 mol%.

5. A method for producing a cellulose derivate according to any one of the preceding claims, by
a) esterification and/or transesterification reaction followed by an addition of at least one compound containing a phosphorus-containing substituent,
in a first step
• cellulose being at least partially reacted with at least one esterification reagent which esterifies the hydroxyl groups of the cellulose to form moieties R', R' being a moiety of the general formula V 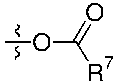 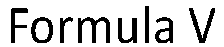 R⁷ being a functionality that is reactive toward the compound containing at least one phosphorus-containing substituent, or
• a cellulose ester of the general formula I as defined in claim 1, with the proviso that
R is the same or different on each occurrence and is selected from the group consisting of moieties of the general formula III,
at least partially with at least one transesterification reagent which transesterifies the moieties according to general formula III to form moieties of general formula V, or
• a mixed cellulose ester of the general formula I as defined in claim 1, with the proviso that
R is the same or different on each occurrence and is selected from the group consisting of hydroxyl groups and moieties of the general formula III, the mixed cellulose ester comprising both hydroxyl groups and moieties R of the general formula III,
with at least one reagent which esterifies the hydroxyl groups of the mixed cellulose ester to form moieties of the general formula V and/or transesterifies the moieties according to the general formula III to form moieties of the general formula V,
and
in a subsequent second step, at least one compound containing a phosphorus-containing substituent is added to the reactive functionality R⁷ of the general formula V, or
b) by esterification or transesterification,
• cellulose being at least partially reacted with at least one esterification reagent which esterifies the hydroxyl groups of the cellulose to form moieties R as defined in claim 1, at least one hydroxyl group being esterified to an ester group according to formula II based on the total cellulose, or
• a cellulose ester of the general formula I as defined in claim 1, with the proviso that
R is the same or different on each occurrence and is selected from the group consisting of moieties of the general formula III,
at least partially with at least one transesterification reagent which transesterifies the moieties according to general formula III to form moieties of general formula II, or
• a mixed cellulose ester of the general formula I as defined in claim 1, with the proviso that
R is the same or different on each occurrence and is selected from the group consisting of hydroxyl groups and moieties of the general formula III as defined in claim 1, wherein the mixed cellulose ester comprising both hydroxyl groups and moieties R of the general formula III,
with at least one reagent which esterifies the hydroxyl groups of the mixed cellulose ester to form moieties of the general formula I as defined in claim 1 and/or transesterifies the moieties according to the general formula III to form moieties of the general formula I,
wherein, based on the entire cellulose derivative, at least one hydroxyl group is esterified to an ester group according to formula II and/or the moieties according to general formula III are at least partially transesterified to form moieties of general formula II.

6. The method according to the preceding claim, **characterized in** the in the
a) esterification and/or transesterification reaction followed by an addition of at least one compound containing a phosphorus-containing substituent
in the first step, the at least one esterification reagent, the at least one transesterification reagent or the at least one reagent contains or consists of at least one compound selected from the compounds of the general formula Vla and/or VIb, 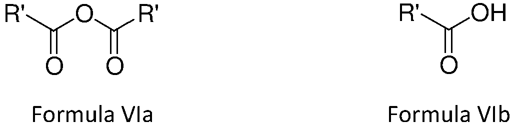
wherein
in Formula VIa
R' is the same or different on each occurrence and is selected from moieties according to the general formula VIIa and VIIb and moieties R² as in claim 1 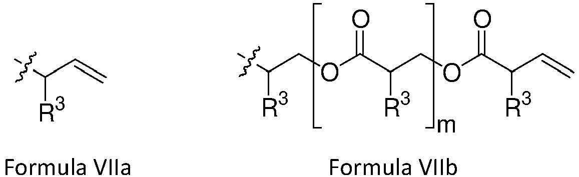 wherein R³ is as defined in claim 2, with the proviso that at least one moiety R' is according to formula Vlla or Vllb, and m is 0, 1 or 2, and
in formula Vlb
R' is selected from moieties according to the general formula VIIa and Vllb,
and
in the subsequent second step, the at least one compound containing a phosphorus-containing substituent is selected from the group consisting of compounds of the general formula VIII 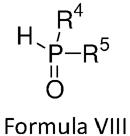
wherein R⁴ and R⁵ are as defined in claim 2, or
b) in the esterification or transesterification in the first step, the at least one esterification reagent, the at least one transesterification reagent or the at least one reagent contains or consists of at least one compound selected from the compounds of the general formula Vla and/or VIb, 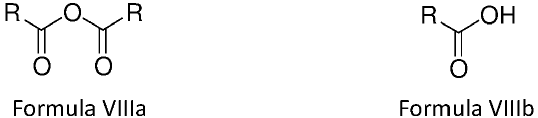 wherein
in Formula VIIIa
R is the same or different on each occurrence and is selected from moieties according to the general formula IV as in claim 2 and moieties R² as defined in claim 1, and
in Formula VIIIb
R is selected from moieties according to the general formula IV as defined in claim 2.

7. The method according to any one of the two preceding claims, **characterized in that** in variants a) or b), based on the totality of the
hydroxyl groups of the cellulose,
ester groups of the cellulose ester or
hydroxyl groups and the ester groups of the mixed cellulose ester,
0.1 to 20, preferably 0.5 to 10, particularly preferably 1.0 to 5.0 mol equivalents of the at least one esterification reagent, of the at least one transesterification reagent or the at least one reagent can be used.

8. The method according to any one of claims 5 to 7, **characterized in that** in variant a), based on the amount of moieties of the general formula V, 0.05 to 10, preferably 0.1 to 5, particularly preferably 0.25 to 1.0 mol equivalents of the at least one compound containing a phosphorus substituent can be used.

9. The method according to any one of claims 5 to 8, **characterized in that** the esterification/transesterification is carried out in the presence of transesterification or esterification catalysts.

10. A use of a cellulose derivative according to the general formula I 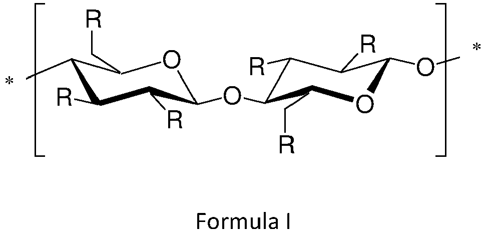 wherein
R being the same or different on each occurrence and being selected from the group consisting of hydroxyl groups, moieties of the general formula II and moieties of the general formula III 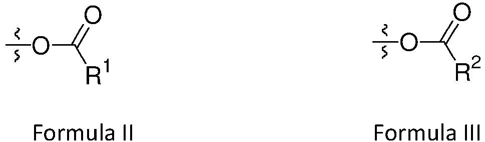
R¹ being identical or different on each occurrence and being selected from the group consisting of phosphorus-containing substituents, and
R² being identical or different on each occurrence and being selected from the group consisting of linear or branched alkyl moieties having 1 to 36 carbon atoms, linear or branched arylalkyl moieties having 7 to 36 carbon atoms,
with the proviso that in formula I, at least one moiety R is a moiety according to formula II,
as a flame retardant, preferably for plastics, in particular for thermoplastics, such as unfilled and filled or reinforced polyesters, polyamides, polyolefins, polycarbonates, PMMA, polystyrene, styrene block polymers such as ABS and SBS, for cellulose esters such as cellulose acetate, cellulose propionate and cellulose butyrate and for polyurethanes and epoxy resins.

11. A flame retardant composition comprising or consisting of at least one cellulose derivative of the general formula I 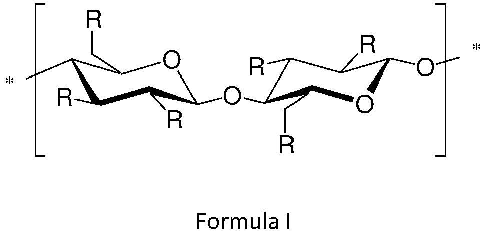 wherein
R being the same or different on each occurrence and being selected from the group consisting of hydroxyl groups, moieties of the general formula II and moieties of the general formula III 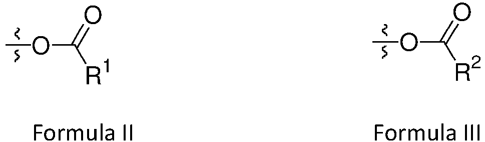
R¹ being identical or different on each occurrence and being selected from the group consisting of phosphorus-containing substituents, and
R² being identical or different on each occurrence and being selected from the group consisting of linear or branched alkyl moieties having 1 to 36 carbon atoms, linear or branched arylalkyl moieties having 7 to 36 carbon atoms,
with the proviso that in formula I, at least one moiety R is a moiety according to formula II,
and at least one further flame retardant differing from the cellulose derivative of the general formula I.

12. The flame retardant composition according to the previous claim, **characterized in that** the at least one further flame retardant differing from the cellulose derivative of the general formula I is selected from the group consisting of metal hydroxides, melamine derivatives, nitrogen bases, phosphates, phosphonates, phosphinates, pyrophosphates, polyphosphates, siloxanes, pentaerythritol and derivatives of these compounds, preferably magnesium hydroxide, aluminum hydroxide, boehmite, melamine polyphosphate, ammonium polyphosphate, melamine cyanurate, zinc pyrophosphate, piperazine pyrophosphate and piperazine polyphosphate, 1,3,5-tris(2-hydroxyethyl) isocyanurate and mixtures and combinations thereof.

13. A plastic composition comprising or consisting of at least one plastic, preferably at least one thermoplastic, and at least one cellulose derivative of the general formula I according to any one of claims 1 to 4 or a flame retardant composition according to any one of claims 11 or 12.

## Revendications

1. Dérivé de cellulose de formule générale I 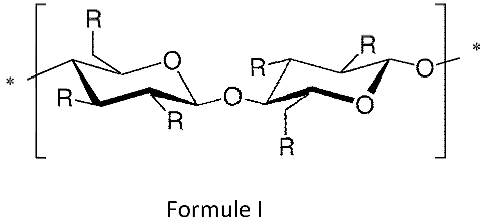 dans lequel
R est identique ou différent à chaque occurrence et est choisi dans le groupe constitué des groupes hydroxyle, des radicaux de formule générale II et des radicaux de formule générale III 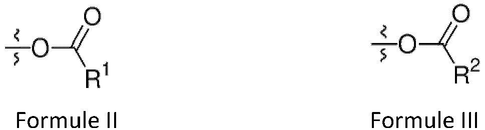
dans lequel
R¹ est identique ou différent à chaque occurrence et est choisi dans le groupe constitué des substituants contenant du phosphore, et
R² est identique ou différent à chaque occurrence et est choisi dans le groupe constitué des radicaux alkyle linéaires ou ramifiés présentant de 1 à 36 atomes de carbone, et des radicaux arylalkyle linéaires ou ramifiés présentant de 7 à 36 atomes de carbone,
à la condition que, dans la formule I, au moins un radical R soit un radical de formule II, **caractérisé en ce que**, dans la formule générale II, le radical R¹ est choisi dans le groupe constitué des radicaux de formule générale IV 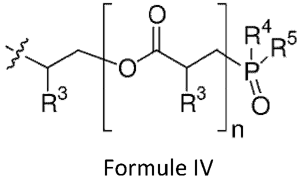 dans lequel les variables sont identiques ou différentes à chaque occurrence, et
R³ est choisi dans le groupe constitué de l'hydrogène ou des radicaux alkyle linéaires ou ramifiés présentant de 1 à 36, de manière préférée de 1 à 6 atomes de carbone,
R⁴ et R⁵ sont choisis de manière indépendante dans le groupe constitué des radicaux alkyle, radicaux aryle, radicaux alkylaryle, radicaux arylalkyle, radicaux O-alkyle, radicaux O-aryle, radicaux O-alkylaryle, radicaux N-alkyle, radicaux N-aryle, et radicaux N-alkylaryle, dans lequel R⁴ et R⁵ ainsi que l'atome de phosphore peuvent également faire partie de systèmes cycliques hétérocycliques pouvant être à un ou plusieurs membres, et
n est égal à 0 ou est un nombre entier compris entre 1 et 3.

2. Dérivé de cellulose selon la revendication précédente, **caractérisé en ce que** le système cyclique hétérocyclique est choisi dans le groupe constitué des groupements ci-dessous : 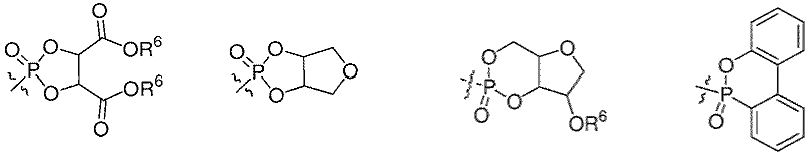 dans lequel
R⁶ est choisi de manière indépendante dans le groupe constitué des radicaux alkyle, radicaux aryle, radicaux alkylaryle, radicaux arylalkyle, radicaux O-alkyle, radicaux O-aryle, radicaux O-alkylaryle, radicaux N-alkyle, radicaux N-aryle, radicaux N-arylalkyle et radicaux N-alkylaryle ; de manière préférée des radicaux alkyle présentant de 1 à 12 atomes de carbone ou des radicaux alkylaryle présentant de 7 à 14 atomes de carbone.

3. Dérivé de cellulose selon l'une quelconque des revendications précédentes, **caractérisé en ce que**
R² est identique ou différent à chaque occurrence et est choisi dans le groupe constitué des radicaux alkyle linéaires ou ramifiés présentant de 1 à 12 atomes de carbone, et des radicaux arylalkyle linéaires ou ramifiés présentant de 7 à 14 atomes de carbone.

4. Dérivé de cellulose selon l'une quelconque des revendications précédentes, **caractérisé en ce que**, par rapport à la totalité des radicaux R, la partie molaire
des radicaux de formule II est d'au moins 2 % en moles, de manière préférée est comprise entre 5 et 100 % en moles, de manière plus préférée est comprise entre 15 et 95 % en moles, de manière particulièrement préférée est comprise entre 40 et 90 % en moles,
des radicaux de formule III est comprise entre 0 et 98 % en moles, de manière préférée est comprise entre 0 et 95 % en moles, de manière plus préférée est comprise entre 5 et 85 % en moles, de manière particulièrement préférée est comprise entre 10 et 90 % en moles, et/ou
des groupes hydroxyle est de 50 % en moles au maximum, de manière préférée est comprise entre 0 et 50 % en moles, de manière préférée est comprise entre 0 et 20 % en moles, de manière particulièrement préférée est comprise entre 0 et 10 % en moles.

5. Procédé de préparation d'un dérivé de cellulose selon l'une quelconque des revendications précédentes, par :
a) réaction d'estérification et/ou de transestérification suivie d'une addition d'au moins un composé contenant un substituant contenant du phosphore, dans lequel
dans une première étape
• de la cellulose est amenée à réagir au moins partiellement avec au moins un réactif d'estérification qui estérifie les groupes hydroxyle de la cellulose en radicaux R', dans lequel R' est un radical de formule générale V 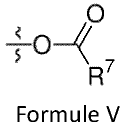 dans lequel R⁷ est une fonctionnalité réactive vis-à-vis du composé contenant au moins un substituant contenant du phosphore, ou
• un ester de cellulose de formule générale I tel que défini dans la revendication 1, à la condition que
R est identique ou différent à chaque occurrence et est choisi dans le groupe constitué des radicaux de formule générale III,
est amené à réagir au moins partiellement avec au moins un réactif de transestérification qui transestérifie les radicaux de formule générale III en radicaux de formule générale V, ou
• un ester de cellulose mixte de formule générale I tel que défini dans la revendication 1, à la condition que
R est identique ou différent à chaque occurrence et est choisi dans le groupe constitué des groupes hydroxyle et des radicaux de formule générale III, dans lequel l'ester de cellulose mixte comprend à la fois des groupes hydroxyle et des radicaux R de formule générale III,
est amené à réagir avec au moins un réactif qui estérifie les groupes hydroxyle de l'ester de cellulose mixte en radicaux de formule générale V et/ou qui transestérifie les radicaux de formule générale III en radicaux de formule générale V,
et
dans une seconde étape venant à la suite, au moins un composé contenant un substituant contenant du phosphore est ajouté à la fonctionnalité réactive R⁷ de formule générale V,
ou
b) par estérification ou transestérification, dans lequel
• de la cellulose est amenée à réagir au moins partiellement avec au moins un réactif d'estérification qui estérifie les groupes hydroxyle de la cellulose en radicaux R tels que définis dans la revendication 1, dans lequel, par rapport à la totalité de la cellulose, au moins un groupe hydroxyle est estérifié en un groupe ester de formule II, ou
• un ester de cellulose de formule générale I tel que défini dans la revendication 1, à la condition que
R est identique ou différent à chaque occurrence et est choisi dans le groupe constitué des radicaux de formule générale III,
est amené à réagir au moins partiellement avec au moins un réactif de transestérification qui transestérifie les radicaux de formule générale III en radicaux de formule générale II, ou
• un ester de cellulose mixte de formule générale I tel que défini dans la revendication 1, à la condition que
R est identique ou différent à chaque occurrence et est choisi dans le groupe constitué des groupes hydroxyle et des radicaux de formule générale III tels que définis dans la revendication 1, dans lequel l'ester de cellulose mixte comprend à la fois des groupes hydroxyle et des radicaux R de formule générale III,
est amené à réagir avec au moins un réactif qui estérifie les groupes hydroxyle de l'ester de cellulose mixte en radicaux de formule générale I tels que définis dans la revendication 1 et/ou transestérifie les radicaux de formule générale III en radicaux de formule générale I,
dans lequel, par rapport à la totalité du dérivé de cellulose, au moins un groupe hydroxyle est estérifié en un groupe ester de formule II et/ou les radicaux de formule générale III sont transestérifiés au moins partiellement en radicaux de formule générale II.

6. Procédé selon la revendication précédente, **caractérisé en ce que**,
a) lors de la réaction d'estérification et/ou de transestérification suivie d'une addition d'au moins un composé contenant un substituant contenant du phosphore
dans une première étape, le au moins un réactif d'estérification, le au moins un réactif de transestérification ou le au moins un réactif contient, ou est constitué de, au moins un composé choisi parmi les composés de formule générale Vla et/ou VIb 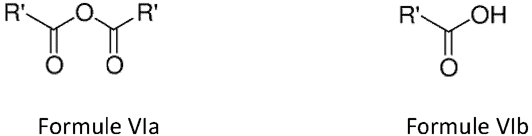
dans lequel
dans la formule Vla
R' est identique ou différent à chaque occurrence et est choisi parmi les radicaux de formule générale VIIa et VIIb et les radicaux R² tels que définis dans la revendication 1 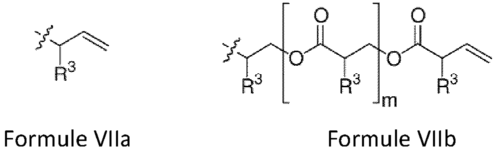
dans lequel R³ est tel que défini dans la revendication 1, à la condition qu'au moins un radical R' est de formule VIIa ou VIIb, et m est égal à 0, 1 ou 2, et
dans la formule VIb
R' est choisi parmi les radicaux de formules générales VIIa et VIIb,
et
dans une seconde étape venant à la suite, le au moins un composé contenant un substituant contenant du phosphore est choisi dans le groupe constitué des composés de formule générale VIII 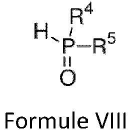
dans lequel R⁴ et R⁵ sont tels que définis dans la revendication 1,
ou
b) lors de l'estérification ou de la transestérification dans une première étape, le au moins un réactif d'estérification, le au moins un réactif de transestérification ou le au moins un réactif contient, ou est constitué de, au moins un composé choisi parmi les composés de formule générale Vla et/ou VIb 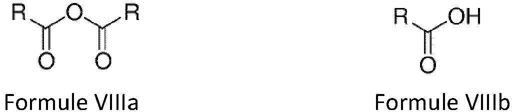 dans lequel
dans la formule VIIIa
R est identique ou différent à chaque occurrence et est choisi parmi les radicaux de formule générale IV tels que définis dans la revendication 1 et les radicaux R² tels que définis dans la revendication 1, et
dans la formule VIIIb
R est choisi parmi les radicaux de formule générale IV tels que définis dans la revendication 1.

7. Procédé selon l'une quelconque des deux revendications précédentes, **caractérisé en ce que**, dans les variantes a) ou b), et par rapport à la totalité
des groupes hydroxy de la cellulose,
des groupes ester de l'ester de cellulose, ou
des groupes hydroxy et des groupes ester de l'ester de cellulose mixte,
entre 0,1 et 20, de manière préférée entre 0,5 et 10, de manière particulièrement préférée entre 1,0 et 5,0 équivalent(s) molaires du au moins un réactif d'estérification, du au moins un réactif de transestérification ou du au moins un réactif est/sont utilisé(s).

8. Procédé selon l'une quelconque des revendications 5 à 7, **caractérisé en ce que**, dans la variante a), et par rapport à la quantité de radicaux de formule générale V, entre 0,05 et 10, de manière préférée entre 0,1 et 5, de manière particulièrement préférée entre 0,25 et 1,0 équivalent(s) molaire du au moins un composé contenant un substituant contenant du phosphore est/sont utilisé(s).

9. Procédé selon l'une quelconque des revendications 5 à 8, **caractérisé en ce que** l'estérification/la transestérification est mise en œuvre en présence de catalyseurs de transestérification ou d'estérification.

10. Utilisation d'un dérivé de cellulose de formule générale I 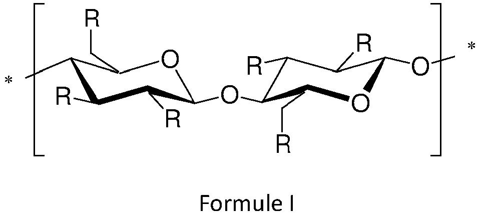 dans lequel
R est identique ou différent à chaque occurrence et est choisi dans le groupe constitué des groupes hydroxyle, des radicaux de formule générale II et des radicaux de formule générale III 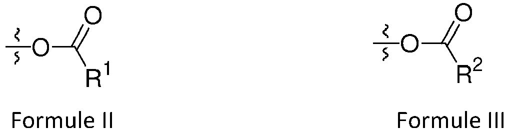
dans lequel
R¹ est identique ou différent à chaque occurrence et est choisi dans le groupe constitué des substituants contenant du phosphore, et
R² est identique ou différent à chaque occurrence et est choisi dans le groupe constitué des radicaux alkyle linéaires ou ramifiés présentant de 1 à 36 atomes de carbone, et des radicaux arylalkyle linéaires ou ramifiés présentant de 7 à 36 atomes de carbone,
à la condition que, dans la formule I, au moins un radical R est un radical de formule II,
comme agent ignifuge, de manière préférée pour des matières plastiques, en particulier pour des matières thermoplastiques, telles que des polyesters non chargés et chargés ou renforcés, des polyamides, des polyoléfines, des polycarbonates, le PMMA, le polystyrène, des polymères séquencés à base de styrène tels que l'ABS et le SBS, pour des esters de cellulose tels que l'acétate de cellulose, le propionate de cellulose et le butyrate de cellulose, et pour des polyuréthanes et des résines époxy.

11. Composition d'agent ignifuge comprenant, ou constituée de, au moins un dérivé de cellulose de formule générale I 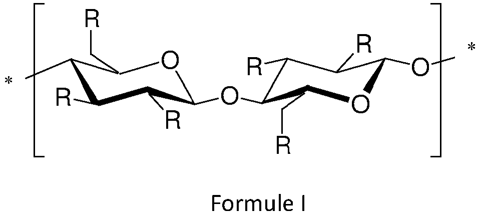 dans lequel
R est identique ou différent à chaque occurrence et est choisi dans le groupe constitué des groupes hydroxyle, des radicaux de formule générale II et des radicaux de formule générale III 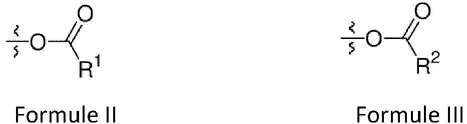
dans lequel
R¹ est identique ou différent à chaque occurrence et est choisi dans le groupe constitué des substituants contenant du phosphore, et
R² est identique ou différent à chaque occurrence et est choisi dans le groupe constitué des radicaux alkyle linéaires ou ramifiés présentant de 1 à 36 atomes de carbone, et des radicaux arylalkyle linéaires ou ramifiés présentant de 7 à 36 atomes de carbone,
à la condition que, dans la formule I, au moins un radical R est un radical de formule II,
et d'au moins un autre agent ignifuge différent du dérivé de cellulose de formule générale I.

12. Composition d'agent ignifuge selon la revendication précédente, **caractérisée en ce que** le au moins un autre agent ignifuge différent du dérivé de cellulose de formule générale I est choisi dans le groupe constitué des hydroxydes métalliques, dérivés de mélamine, bases azotées, phosphates, phosphonates, phosphinates, pyrophosphates, polyphosphates, siloxanes, pentaérythritol, et des dérivés des dits composés, de manière préférée l'hydroxyde de magnésium, l'hydroxyde d'aluminium, la boehmite, le polyphosphate de mélamine, le polyphosphate d'ammonium, le cyanurate de mélamine, le pyrophosphate de zinc, le pyrophosphate de pipérazine et le polyphosphate de pipérazine, l'isocyanurate de 1,3,5-tris(2-hydroxyéthyle), et des mélanges et des combinaisons de ceux-ci.

13. Composition de matière plastique comprenant, ou constituée de, au moins une matière plastique, de manière préférée au moins une matière plastique thermoplastique, et d'au moins un dérivé de cellulose de formule générale I selon l'une quelconque des revendications 1 à 4 ou d'une composition d'agent ignifuge selon l'une quelconque des revendications 11 ou 12.
